# EUROPEAN PATENT APPLICATION

(11) **EP 4 765 396 A1**
(43) Date of publication of application: **24.06.2026**
(21) Application number: 24914573.1
(22) Date of filing: 03.01.2024
(51) Int. Cl.: H01M 50/242, H01M 50/204, H01M 50/209, H01M 50/244, H01M 50/258, H01M 50/249, H01M 50/264, H01M 50/293

(54) **BATTERY AND ELECTRIC DEVICE**

(71) Applicant: Contemporary Amperex Technology Co., Limited, Ningde, Fujian 352100 (CN)
(72) Inventor: YUAN, Shenggang, Ningde, Fujian 352100 (CN); WANG, Zengzhong, Ningde, Fujian 352100 (CN); WANG, Peng, Ningde, Fujian 352100 (CN); JIA, Jun, Ningde, Fujian 352100 (CN); NIU, Jianxin, Ningde, Fujian 352100 (CN)
(74) Representative: Lorenz Seidler Gossel Part. mbB
(86) International application number: PCT/CN2024/070406
(87) International publication number: WO 2025/145340

(57) **Abstract**

A battery and an electric device. A battery (1100) comprises a box body (10), insulating members (30), and at least one battery cell (20). The box body (10) comprises first side beams (121) and second side beams (122), and the first side beams (121) and the second side beams (122) are connected and define an accommodating space (101). The at least one battery cell (20) is located in the accommodating space (101), battery cells adjacent to the first side beams (121) are first battery cells (201), the maximum area surface of each first battery cell (201) is a first surface (21), and the first surface (21) of the first battery cell (201) faces the corresponding first side beam (121). The insulating members (30) are located in the accommodating space (101), and each insulating member (30) is provided between the first battery cells (201) and the corresponding first side beam (121), so that when the first side beam (121) is impacted, the first surfaces (21) of the first battery cells (201) bear impact, reducing the impact deformation of the first battery cells (201), reducing the short-circuit risk of the first battery cells (201), thereby improving the use reliability of the battery (1100).

## Description

### TECHNICAL FIELD

The present application relates to the technical field of batteries, and in particular, to a battery and an electric device.

### BACKGROUND

Energy conservation and emission reduction are crucial to the sustainable development of the automobile industry. In this context, electric vehicles have become a core part of the sustainable development of the automobile industry due to their energy-saving and environmentally friendly characteristics. However, for electric vehicles, the battery technology is a key factor affecting their development.

During the actual use of electric vehicles, the battery may be subjected to collisions. In the event of such collisions, the battery cells in the battery are prone to short circuits due to compression and deformation, which seriously affects the service reliability of the battery.

The above statements are only used to provide background information related to the present application and do not necessarily constitute the prior art.

### SUMMARY

An objective of embodiments of the present application is to provide a battery and an electric device, so as to improve the service reliability of batteries.

The technical solutions used in the embodiments of the present application are as follows:

In a first aspect, a battery is provided. The battery includes a case, an insulating member, and at least one battery cell. The case includes a first side beam and a second side beam, and the first side beam and the second side beam are connected and define, in an enclosing manner, an accommodating space; the at least one battery cell is located in the accommodating space, the battery cell adjacent to the first side beam is a first battery cell, a surface of the first battery cell with a largest area is a first surface, and the first surface of the first battery cell is disposed facing the first side beam; the insulating member is located in the accommodating space, and the insulating member is disposed between the first battery cell and the first side beam.

In the battery according to the embodiments of the present application, the case includes the first side beam and the second side beam. The first side beam and the second side beam are connected and define, in an enclosing manner, the accommodating space. The battery cell and the insulating member are both located in the accommodating space. The battery cell adjacent to the first side beam is the first battery cell, and the surface of the first battery cell with the largest area is the first surface. The first surface of the first battery cell is disposed facing the first side beam, and the insulating member is disposed between the first battery cell and the first side beam, such that when the first side beam is subjected to an impact, the impact is borne by the first surface of the first battery cell. Since the first surface of the first battery cell allows a greater intrusion than other surfaces of the first battery cell, and the risk of short circuit of the first battery cell is low, the service reliability of the battery can be improved. In addition, during the impact, since the insulating member is located between the first battery cell and the insulating member, the insulating member can also bear a certain impact force, thereby protecting the first battery cell, reducing the impact-induced deformation of the first battery cell, reducing the risk of short circuit of the first battery cell, and further improving the service reliability of the battery.

In some embodiments, a length of the first side beam is greater than a length of the second side beam.

By adopting the technical solution of the embodiments, the length of the first side beam is greater than the length of the second side beam, while the first surface of the first battery cell faces the first side beam. In addition, the insulating member is disposed between the first side beam and the first battery cell, which can better reduce the impact-induced deformation of the first battery cell, reduce the risk of short circuit of the first battery cell, and improve the service reliability of the battery.

In some embodiments, one side of the insulating member abuts against the first battery cell, and/or the other side of the insulating member abuts against the first side beam.

By adopting the technical solution of the embodiments, the insulating member abuts against the first battery cell and/or the first side beam, such that the insulating member can bear a greater impact force, thereby reducing the risk of deformation and short circuit of the first battery cell and improving the service reliability of the battery. In addition, the internal space of the battery can also be saved, and the volumetric energy density of the battery can be improved.

In some embodiments, the insulating member is fixedly connected to the first battery cell and the first side beam.

By adopting the technical solution of the embodiments, the first battery cell and the first side beam are fixedly connected through the insulating member, and the insulating member can improve the connection strength between the first battery cell and the first side beam, thereby helping to improve the structural strength and rigidity of the battery and further improving the service reliability of the battery.

In some embodiments, one side of the insulating member is bonded to the first battery cell; and/or the other side of the insulating member is bonded to the first side beam.

By adopting the technical solution of the embodiments, the insulating member is connected by means of bonding, which features a simple bonding operation and thus helps to improve the production efficiency of the battery.

In some embodiments, the insulating member is an elastic insulating member or a rigid insulating member; and/or the insulating member is a heat insulating member.

By adopting the technical solution of the embodiments, in the case that the insulating member is an elastic insulating member, the insulating member can also play a buffering role. In one aspect, it can buffer the expansion and deformation of the first battery cell, and in another aspect, it can also buffer the impact, thereby reducing the impact-induced deformation of the first battery cell and helping to improve the service reliability of the battery. In the case that the insulating member is a rigid insulating member, the rigid insulating member can protect the first battery cell, thereby reducing the impact-induced deformation of the first battery cell and improving the service reliability of the battery. In the case that the insulating member is a heat insulating member, the insulating member can provide heat insulation, thereby reducing the impact of the low-temperature environment on the first battery cell and improving the heat preservation performance and overall charging and discharging performance of the battery.

In some embodiments, the insulating member includes a plurality of layer bodies. The plurality of layer bodies are stacked in a first direction, and the first direction is a distribution direction of the battery cell and the first side beam. The plurality of layer bodies include at least one of an elastic insulating layer and a rigid insulating layer; and/or, the plurality of layer bodies include a heat insulating layer.

By adopting the technical solution of the embodiments, the insulating member may be of a multi-layer structure, and the insulating member exhibits good structural strength. The material of each layer body may also be flexibly configured based on actual needs, such that the insulating member has different properties to better improve the service reliability and performance of the battery.

In some embodiments, a protrusion is provided on a surface of the insulating member facing the first side beam.

By adopting the technical solution of the embodiments, the arrangement of the protrusion enables a deformation space to be formed between the insulating member and the first side beam to accommodate the impact-induced deformation of the first side beam, so as to buffer the impact of the first side beam on the insulating member, thereby reducing the risk of impact-induced deformation of the first battery cell, reducing the risk of short circuit, and improving the service reliability of the battery.

In some embodiments, a plurality of protrusions are provided, and the plurality of protrusions are spaced apart from each other in a height direction of the first battery cell.

By adopting the technical solution of the embodiments, the plurality of protrusions can form a multi-point buffer, in the height direction of the first battery cell, against the impact exerted by the first side beam on the insulating member, thereby better reducing the impact force acting on the first battery cell, reducing the risk of impact-induced deformation of the first battery cell, reducing the risk of short circuit, and improving the service reliability of the battery.

In some embodiments, a plurality of first battery cells are provided, the plurality of first battery cells are disposed in a second direction, and the second direction is parallel to the first surface: at least two first battery cells are connected to the insulating member.

By adopting the technical solution of the embodiments, the insulating member can connect the plurality of first battery cells together to form a whole, which can improve the structural strength of the plurality of first battery cells, thereby helping to reduce the impact-induced deformation of the first battery cells and improving the service reliability of the battery.

In some embodiments, a projection of the insulating member in the first direction at least partially overlaps with projections of the first surfaces of the at least two first battery cells in the first direction, and the first direction is perpendicular to the first surfaces.

By adopting the technical solution of the embodiments, the insulating member can also protect the plurality of first battery cells, which also helps to reduce the risk of short circuit of the first battery cells and improves the service reliability of the battery.

In some embodiments, the first side beam is provided with a mounting structure configured to achieve mounting of the battery.

By adopting the technical solution of the embodiments, the first side beam provided with the mounting structure exhibits good structural strength, such that the first side beam provided with the mounting structure can better protect the first battery cell, thereby effectively reducing the impact-induced deformation of the first battery cell, reducing the risk of short circuit of the first battery cell, and improving the service reliability of the battery.

In some embodiments, two first side beams are provided, the two first side beams are disposed opposite to each other, and the battery cell is located between the two first side beams. The insulating member is disposed between one of the first side beams and the corresponding first battery cell, and the insulating member is disposed between the other first side beam and the corresponding first battery cell.

By adopting the technical solution of the embodiments, the first surface of the first battery cell and the insulating member jointly bear the impact in the process of impacting, from the two opposite sides of the battery, the corresponding first side beam. This can reduce the impact-induced deformation of the first battery cell, effectively reduce the risk of short circuit of the first battery cell, and improve the service reliability of the battery.

In some embodiments, a plurality of first battery cells are provided, the plurality of battery cells include a type-I battery cell and a type-II battery cell, at least the first battery cells are the type-II battery cells, and energy density of the type-II battery cell is greater than energy density of the type-I battery cell.

By adopting the technical solution of the embodiments, the first battery cell is set as the type-II battery cell, and the type-II battery cell has higher energy density, such that the type-II battery cell exhibits better charging and discharging performance at a low temperature. This can reduce the impact of the low-temperature environment on the first battery cell, effectively improve the heat preservation performance and charging and discharging performance of the battery at a low temperature, ameliorate the temperature difference, and well balance the cost and capacity of the battery.

In some embodiments, the type-I battery cell includes a sodium-ion battery cell, and the type-II battery cell includes a lithium-ion battery cell; or the type-I battery cell includes a lithium iron phosphate battery cell, and the type-II battery cell includes a ternary battery cell.

By adopting the technical solution of the embodiments, the type-I battery cell and the type-II battery cell described above are selected, such that the energy density of the selected type-II battery cell can be better made greater than the energy density of the type-I battery cell, so as to improve the overall heat preservation performance, charging and discharging performance, and energy density of the battery at a low temperature.

In some embodiments, the case further includes a reinforcing beam. The reinforcing beam is located in the accommodating space and divides the accommodating space into a first accommodating cavity and a second accommodating cavity, and the insulating member and the battery cell are located in the first accommodating cavity.

By adopting the technical solution of the embodiments, the arrangement of the reinforcing beam can enhance the structural strength of the case, thereby helping to improve the service reliability of the battery. The first accommodating cavity is configured to accommodate the battery cell, and the second accommodating cavity can accommodate other components of the battery. The battery cell can be separated from other components by the reinforcing beam, which can reduce the risk of damage and short circuit of the battery cell due to interference between other components and the battery cell, thereby being more beneficial for improving the service reliability of the battery. The case adopts the structural forms of the first side beam, the reinforcing beam, and the second side beam. This structure is simple and reliable, and allows for the elimination of transverse and longitudinal beams inside the case, so as to provide more space for mounting the battery cell, thereby helping to improve the volumetric energy density of the battery.

In some embodiments, the battery further includes a control device configured to control the battery cell, and the control device is located in the second accommodating cavity.

By adopting the technical solution of the embodiments, the control device is the second accommodating cavity, and the battery cell and the control device are separated by the reinforcing beam. This can reduce the mutual influence between the battery cell and the control device, thereby helping to improve the service reliability of the battery.

In some embodiments, the case further includes a covering plate. The covering plate is located on one side of the first side beam and closes an opening on one side of the accommodating space.

By adopting the technical solution of the embodiments, the covering plate closes the opening on one side of the accommodating space, which can reduce the influence of external components on the battery cell and the insulating member, thereby helping to improve the service reliability of the battery.

In some embodiments, the covering plate is a heat exchange plate configured to exchange heat with the battery cell.

By adopting the technical solution of the embodiments, the covering plate is the heat exchange plate, and the heat exchange plate exchanges heat with the battery cell, which is beneficial for controlling the problem of the battery cell within a suitable problem range, so as to improve the service reliability and charging and discharging performance of the battery cell, and improve the service reliability and charging and discharging performance of the battery.

In some embodiments, the case further includes a case cover. The case cover is located on the other side of the first side beam and closes an opening on the other side of the accommodating space.

By adopting the technical solution of the embodiments, the case cover and the covering plate can close the openings on the two opposite sides of the accommodating space, which can improve the sealing performance of the case and help to improve the service reliability and service life of the battery.

In a second aspect, an electric device is provided. The electric device includes the battery according to the above embodiments.

The electric device according to the embodiments of the present application employs the above battery, and the battery cell exhibits good service reliability, which improves the service reliability and service life of the battery.

In some embodiments, the electric device is a vehicle, and the first side beam is located on a side of the first battery cell facing a door of the vehicle.

By adopting the technical solution of the embodiments, in the case that the vehicle experiences a side-pillar collision or a side compression, the first side beam of the battery is subjected to the primary impact. During the impact process, the impact is borne by both the first surface of the first battery cell and the insulating member. Since the first surface allows a significantly greater intrusion than other surfaces of the first battery cell, the risk of short circuit due to the compression and deformation of the first battery cell is relatively low, which can greatly improve the safety of the battery under the side-pillar collision and side compression conditions. In addition, during the impact, since the insulating member is located between the first battery cell and the insulating member, the insulating member can also bear a certain impact force. Thus, the insulating member can protect the first battery cell, thereby reducing the impact force acting on the battery cell, reducing the risk of short circuit of the first battery cell, and further improving the safety of the battery under the side-pillar collision and side compression conditions.

The above description is only an overview of the technical solutions of the present application. To more clearly understand the technical means of the present application to enable implementation in accordance with the content of the specification and to make the above and other purposes, features, and advantages of the present application more obvious and easy to understand, the detailed description of the present application is provided below.

### BRIEF DESCRIPTION OF THE DRAWINGS

To more clearly illustrate the technical solutions in embodiments of the present application, the drawings required for illustrating the embodiments or description of the prior art are briefly described below. Apparently, the drawings in the following description illustrate merely some embodiments of the present application, and those of ordinary skill in the art may still derive other drawings from these drawings without creative efforts.
FIG. 1 is a schematic structural diagram of a vehicle according to some embodiments of the present application;
FIG. 2 is a schematic diagram of an exploded structure of a battery according to some embodiments of the present application;
FIG. 3 is a schematic structural diagram of a battery cell according to some embodiments of the present application;
FIG. 4 is a schematic structural diagram of the battery shown in FIG. 2 from a perspective where a case cover is hidden;
FIG. 5 is a schematic structural diagram of the battery shown in FIG. 2 from another perspective where a case cover is hidden;
FIG. 6 is a partially enlarged view of the portion A in FIG. 5;
FIG. 7 is a schematic structural diagram of the battery shown in FIG. 2 with a case hidden;
FIG. 8 is a schematic structural diagram of the insulating member shown in FIG. 7;
FIG. 9 is a schematic structural diagram of a battery cell with a case hidden according to some embodiments of the present application;
FIG. 10 is a schematic diagram of an exploded structure of the insulating member shown in FIG. 9;
FIG. 11 is a schematic structural diagram of a battery with a case hidden according to some other embodiments of the present application; and
FIG. 12 is a schematic structural diagram of the insulating member shown in FIG. 11.

Reference numerals in the drawings have the following meanings:
1000: vehicle; 1100: battery; 1200: controller; 1300: motor; 10: case; 11: case cover; 12: lower case body; 121: first side beam; 1211: mounting structure; 122: second side beam; 123: reinforcing beam; 124: covering plate; 125: heat exchange plate; 101: accommodating space; 1011: first accommodating cavity; 1012: second accommodating cavity; 20: battery cell; 21: first surface; 22: first end surface; 23: first side surface; 24: second side surface; 201: first battery cell; 202: type-I battery cell; 203: type-II battery cell; 30: insulating member; 31: layer body; 32: protrusion; 40: control device; 50: busbar component.

### DETAILED DESCRIPTION

In order to make the technical problems to be addressed, the technical solutions, and the beneficial effects of the present application more apparent, the present application is further described in detail below with reference to the drawings and embodiments. It should be understood that the specific embodiments described herein are merely illustrative of the present application and do not limit the present application.

Unless otherwise defined, all technical and scientific terms used herein have the same meaning as commonly understood by those skilled in the technical field to which the present application belongs. The terms used herein are only used to illustrate the specific embodiments, rather than limit the present application. The terms "include", "comprise", "have", and "provided with", and any variants thereof in the specification and claims of the present application and the above description of the drawings are intended to cover non-exclusive inclusions.

In the description of the embodiments of the present application, technical terms such as "first" and "second" are only used to distinguish different objects and should not be interpreted as indicating or implying the relative importance or implicitly indicating the number, specific order, or primary and secondary relationship of the technical features referred to. Therefore, a feature defined with "first" or "second" may explicitly or implicitly include one or more such features.

Reference in the present application to "embodiment" means that a particular feature, structure, or characteristic described in combination with the embodiment may be included in at least some embodiments of the present application. The references of the word in the context of the specification do not necessarily refer to the same embodiment, nor to separate or alternative embodiments exclusive of other embodiments. It will be explicitly and implicitly understood by those skilled in the art that the embodiments described herein may be combined with other embodiments in any suitable manner.

In the description of the embodiments of the present application, the term "and/or" is merely a way to describe the association relationship between associated objects, indicating that there are three possible relationships. For example, "A and/or B" may denote: the presence of A alone, the simultaneous presence of A and B, and the presence of B alone. In addition, the character "/" herein generally indicates an "or" relationship between the associated objects before and after the "/".

In the description of the embodiments of the present application, the term "plurality of" refers to two or more (including two). Similarly, "plurality of groups" refers to two or more (including two) groups, and "plurality of pieces" refers to two or more (including two) pieces. The meaning of "several" is one or more, unless otherwise specifically defined.

In the description of the embodiments of the present application, the technical terms "center", "longitudinal", "transverse", "length", "width", "thickness", "upper", "lower", "front", "rear", "left", "right", "vertical", "horizontal", "top", "bottom", "inner", "outer", "clockwise" "counterclockwise", "axial", "radial", "circumferential", and the like indicate orientations or positional relationships based on those shown in the drawings. They are merely for the convenience of describing the embodiments of the present application and simplifying the description, rather than indicating or implying that the device or element referred to must have a specific orientation or be constructed and operated in the specific orientation, and thus should not be construed as a limitation to the embodiments of the present application.

In the description of the embodiments of the present application, unless otherwise clearly specified and defined, the technical terms "mount", "interconnect", "connect", "fix", and the like should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the embodiments of the present application may be interpreted according to specific conditions.

In the description of the embodiments of the present application, unless otherwise clearly specified and defined, when an element is referred to as being "fixed to" or "disposed on" another element, it may be directly on or indirectly on the other element. When an element is referred to as being "connected to" another element, it may be directly connected to the other element or indirectly connected to the other element.

The battery mentioned in the embodiments of the present application refers to a single physical module including one or a plurality of battery cells to provide higher voltage and capacity. The battery generally includes a case configured to encapsulate one or a plurality of battery cells. The case can, to a certain extent, prevent liquid or other foreign matter from affecting the charging or discharging of the battery cells.

If a plurality of battery cells are provided in a battery, the plurality of battery cells may be connected in series, in parallel, or in series-parallel. The series-parallel connection means that both series connection and parallel connection are present for the connection of the plurality of battery cells. The plurality of battery cells may be directly connected in series, in parallel, or in series-parallel, and then the whole formed by the plurality of battery cells is accommodated in the case. Certainly, the situation may be that in the battery, the plurality of battery cells are first connected in series, in parallel, or in series-parallel to form battery modules, and then the plurality of battery modules are connected in series, in parallel, or in series-parallel to form a whole and accommodated in the case. The battery may further include other structures. For example, the battery may further include a busbar component for achieving electrical connection among the plurality of battery cells.

The battery cell in the embodiments of the present application includes an electrode assembly and a housing, and the electrode assembly is mounted in the housing, thus protecting the electrode assembly through the housing.

The electrode assembly is also referred to as a cell, and the electrode assembly is composed of a positive electrode plate, a negative electrode plate, and a separator. The electrode assembly primarily operates by the movement of metal ions between the positive electrode plate and the negative electrode plate. The positive electrode plate includes a positive electrode current collector and a positive electrode active substance layer, and the positive electrode active substance layer is applied on the surface of the positive electrode current collector. The portion of the positive electrode current collector that is not coated with the positive electrode active substance layer protrudes from the portion of the positive electrode current collector that is coated with the positive electrode active substance layer, and the portion that is not coated with the positive electrode active substance layer serves as a positive electrode tab, or a metal conductor is welded to the positive electrode current collector and led out to serve as the positive electrode tab. Taking lithium-ion batteries as an example, the material of the positive electrode current collector may be aluminum, and the positive electrode active substance may be lithium cobaltate, lithium iron phosphate, ternary lithium, lithium manganate, or the like. The negative electrode plate includes a negative electrode current collector and a negative electrode active substance layer, and the negative electrode active substance layer is applied on the surface of the negative electrode current collector. The portion of the negative electrode current collector that is not coated with the negative electrode active substance layer protrudes from the portion of the negative electrode current collector that is coated with the negative electrode active substance layer, and the portion that is not coated with the negative electrode active substance layer serves as a negative electrode tab, or a metal conductor is welded to the negative electrode current collector and led out to serve as the negative electrode tab. The material of the negative electrode current collector may be copper, and the negative electrode active substance may be carbon, silicon, or the like. To ensure, to a certain extent, the passing of a large current without fusing, there are a plurality of positive electrode tabs that are stacked together, and there are a plurality of negative electrode tabs that are stacked together. It can be understood that in the electrode assembly, the number of the positive electrode tabs may be one, and the number of the negative electrode tabs may also be one. That is, the electrode assembly is provided with two groups of tabs, each group includes at least one tab, one group of tabs serves as positive electrode tabs, and the other group of tabs serves as negative electrode tabs.

The electrode assembly may be of a wound structure or a stacked structure. The embodiments of the present application are not limited thereto. For a wound structure, generally, tabs are welded to current collectors, and components are then arranged in the sequence of positive electrode plate-separator-negative electrode plate-separator, and then winding is performed to obtain a cylindrical or prismatic cell. For a stacked structure, generally, tabs are led out from current collectors, and the positive electrode plate, the negative electrode plate, and the separator are arranged in the sequence of positive electrode plate-separator-negative electrode plate-separator, and are stacked layer by layer to form a stacked cell, where the separator may be cut into separator pieces for direct stacking, or the separator may be folded in a Z-shape without being cut. The material of the separator may be polypropylene (PP), polyethylene (PE), or the like. The separator is an insulating film disposed between the positive electrode plate and the negative electrode plate, and its main function is to isolate the positive electrode and the negative electrode and prevent electrons in the battery from passing freely, so as to prevent short circuits to a certain extent, thus enabling ions in the electrolytic solution to pass freely between the positive electrode and the negative electrode to form a circuit between the positive electrode and the negative electrode. The positive electrode plate and the negative electrode plate are collectively referred to as an electrode plate. The positive electrode tab and the negative electrode tab are collectively referred to as a tab.

The housing refers to a shell structure having a space therein to accommodate and protect the electrode assembly. The housing may be made of a material with a certain hardness and strength, such that the housing is not easy to deform when being compressed and collided, thereby enabling the battery cell to have higher structural strength and improved reliability. The housing may be made of various materials, including but not limited to copper, iron, aluminum, stainless steel, aluminum alloy, plastic, and the like.

The housing of the battery cell is provided with an electrode terminal. The electrode terminal refers to a conductive member disposed on the housing, and the electrode terminal is connected to the tabs of the electrode assembly to output electric energy from the battery cell or charge the battery cell. The battery cell generally has two electrode terminals, and the two electrode terminals are respectively connected to positive and negative electrode tabs of the electrode assembly. The electrode terminal connected to the positive electrode tab is a positive electrode terminal, and the electrode terminal connected to the negative electrode tab is a negative electrode terminal. The electrode assembly is connected to the electrode terminals to form a battery cell.

When a battery cell is charged, the current converts electric energy into chemical energy through a chemical reaction between an electrolyte and electrodes, and the chemical energy is stored in the battery cell. During discharging, chemical energy is converted into electric energy for release. This energy conversion process is accompanied by energy loss and heat generation. If the internal heat dissipation of the battery cell is poor and the heat cannot be effectively dissipated, the battery cell will be overheated. There is a certain internal resistance inside the battery cell, and a resistance loss will be generated when the current passes through the internal resistance, resulting in heat generation inside the battery cell. When the current is too large or the internal resistance is too high, the heat generation inside the battery cell will be intensified, resulting in overheating of the battery cell. If the designed maximum voltage is exceeded during the charging of the battery cell or the battery cell's voltage drops to an excessively low level during discharging, overvoltage or overdischarging of the battery cell will be caused. Overcharging or overdischarging will cause uncontrolled chemical reactions inside the battery cell, generating excessive heat and resulting in overheating of the battery cell. In addition, there may be defects in the design or manufacturing process of the battery cell, such as improper material selection and poor battery cell assembly. These defects may lead to poor heat dissipation or uneven current distribution inside the battery cell, thereby increasing the risk of overheating or overvoltage of the battery cell. Therefore, the battery cell may be subjected to overheating or overvoltage during charging or use.

The battery cell generally contains a certain amount of gas. When the battery cell is charged or discharged, gas generation or absorption reactions occur in the solution in the electrolyte. The generation of these gases will cause an increase in gas pressure inside the battery cell, resulting in expansion and deformation of the battery cell. During the charging or discharging of the battery cell, the positive and negative electrode materials will react chemically to form new compounds. These chemical reactions are accompanied by a change in volume, resulting in a change in the volume of the material inside the battery cell, and thereby causing the battery to expand and deform. When the battery cell is overcharged or overdischarged, the chemical reaction inside the battery cell is out of control, such that excessive gas is generated or the structure of the electrode material is damaged, thereby causing the expansion and deformation of the battery cell. The charging or discharging of the battery cell in a high-temperature environment will accelerate the internal chemical reaction, thereby intensifying gas generation and volume change. The high temperature may also cause expansion of internal substances of the battery cell, and also result in expansion and deformation of the battery cell.

To reduce the risk of explosion or fire caused by overheating or overvoltage of the battery cell during charging or use, pressure relief mechanisms such as anti-explosion valves and anti-explosion sheets are often provided on the housing of the battery cell, such that when the temperature or pressure of the battery cell exceeds a safety threshold, the gas or liquid inside the battery cell can be released to reduce the pressure inside the battery cell and reduce the risk of explosion of the battery cell. In this way, the safety performance of the battery cell can be improved, and potential safety risks can be reduced.

Energy conservation and emission reduction are crucial to the sustainable development of the automobile industry. In this context, electric vehicles have become a core part of the sustainable development of the automobile industry due to their energy-saving and environmentally friendly characteristics. However, for electric vehicles, the battery technology is a key factor affecting their development.

The battery usually includes a case and battery cells disposed in the case. However, during the actual use of electric vehicles, the battery may be subjected to collisions. In particular, when the side beam of the case is impacted by the collision, the battery cells adjacent to the impacted side beam are subjected to the greatest impact force, undergo the most severe compression and deformation, and are most prone to short circuits, thereby seriously affecting the service reliability of the battery.

Based on this, in the battery according to the embodiments of the present application, the battery cell adjacent to the first side beam is the first battery cell, and the surface of the first battery cell with the largest area is the first surface. The first surface of the first battery cell is disposed facing the first side beam, and the insulating member is disposed between the first battery cell and the first side beam, such that when the first side beam is subjected to an impact, the impact force is borne by the first surface of the first battery cell. Since the first surface of the first battery cell allows a greater intrusion than the surfaces of the first battery cell, and the risk of short circuit of the first battery cell is low, the improvement of the service reliability of the battery is facilitated. In addition, during the impact, since the insulating member is located between the first battery cell and the insulating member, the insulating member can also bear a certain impact force, thereby protecting the first battery cell, reducing the impact-induced deformation of the first battery cell, reducing the risk of short circuit of the first battery cell, and further improving the service reliability of the battery.

The technical solutions described in the embodiments of the present application are suitable for batteries and electric devices using batteries.

The electric device may be a vehicle, a mobile phone, a portable device, a laptop computer, a ship, a spacecraft, an electric toy, an electric tool, or the like. The spacecraft includes an airplane, a rocket, a space shuttle, a spaceship, and the like; the electric toy includes a stationary or mobile electric toy, such as a game console, an electric car toy, an electric ship toy, and an electric aircraft toy; the electric tool includes an electric metal cutting tool, an electric grinding tool, an electric assembling tool, and an electric tool for railways, such as an electric drill, an electric grinder, an electric wrench, an electric screwdriver, an electric hammer, an electric impact drill, a concrete vibrator, and an electric planer. The electric devices described above are not specially limited in the embodiments of the present application. The battery may also be an energy storage device. The energy storage device includes an energy storage container, an energy storage electrical cabinet, and the like.

For ease of explanation, the following embodiments will be described by taking a vehicle as an example of the electric device.

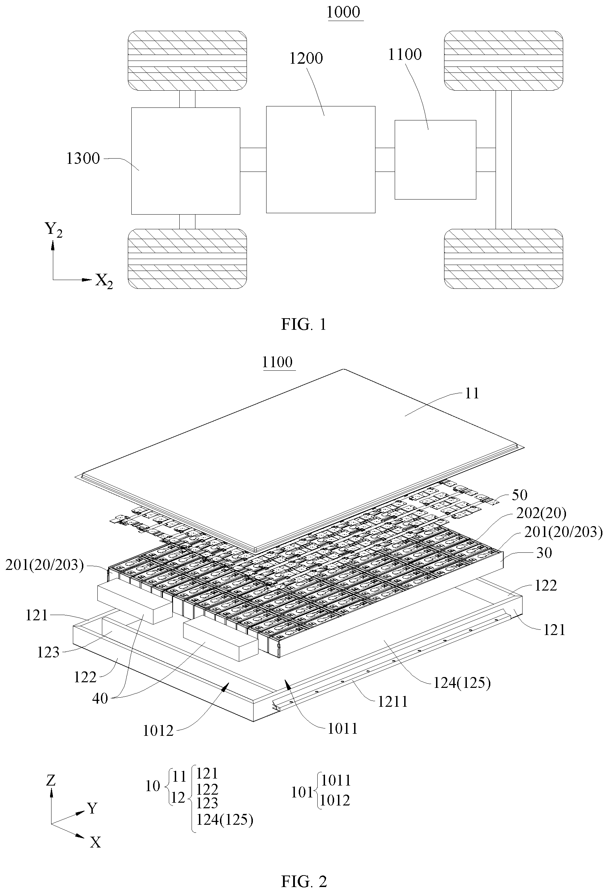

Referring to FIG. 1, FIG. 1 is a schematic structural diagram of a vehicle 1000 according to some embodiments of the present application.

The vehicle 1000 may be a fuel vehicle, a gas vehicle, or a new energy vehicle. The new energy vehicle may be a pure electric vehicle, a hybrid vehicle, an extended-range vehicle, or the like. A battery 1100 is disposed inside the vehicle 1000, and the battery 1100 may be disposed at the bottom, head, or tail of the vehicle 1000. The battery 1100 may be configured to power the vehicle 1000. For example, the battery 1100 may serve as an operation power source of the vehicle 1000. The vehicle 1000 may further include a controller 1200 and a motor 1300. The controller 1200 is configured to control the battery 1100 to supply power to the motor 1300, e.g., for the operation power needed by the vehicle 1000 for start-up, navigation, and driving.

In some embodiments of the present application, the battery 1100 may not only serve as an operation power source for the vehicle 1000, but also as a driving power source for the vehicle 1000 to, instead of or in part instead of fuel or natural gas, provide driving power for the vehicle 1000.

To meet different power usage requirements, the battery 1100 may include a plurality of battery cells 20. The plurality of battery cells 20 may be connected in series, in parallel, or in series-parallel. The series-parallel connection refers to a combination of series connection and parallel connection. The battery 1100 may also be referred to as a battery pack. Optionally, the plurality of battery cells 20 may be first connected in series, in parallel, or in series-parallel to form a battery module, and then a plurality of battery modules are connected in series, in parallel, or in series-parallel to form the battery 1100. That is, the plurality of battery cells 20 may be directly assembled into the battery 1100, or may be first assembled into battery modules, which are then assembled into the battery 1100.

The battery 1100 further includes a case 10 configured to encapsulate one or a plurality of battery cells 20. The case 10 can, to a certain extent, prevent liquid or other foreign matter from affecting the charging or discharging of the battery cells 20.

Referring to FIG. 2, FIG. 2 is a schematic diagram of an exploded structure of a battery 1100 according to some embodiments of the present application. The battery 1100 has a height direction, a length direction, and a width direction. The height direction of the battery 1100 may refer to a Z direction, the width direction of the battery 1100 may refer to an X direction, and the length direction of the battery 1100 may refer to a Y direction. The length of the battery 1100 may be greater than or less than the width. The case 10 defines an outline structure of the battery 1100. The height direction of the case 10 is the height direction of the battery 1100, the length direction of the case 10 is the length direction of the battery 1100, and the width direction of the case 10 is the width direction of the battery 1100.

For ease of understanding and description, only a rectangular parallelepiped battery cell 20 is illustrated in the embodiments according to the present application. It should be understood that the embodiments according to the present application are also applicable to a cylinder battery cell 20 or pouch battery cell 20. This is not limited in the embodiments of the present application.

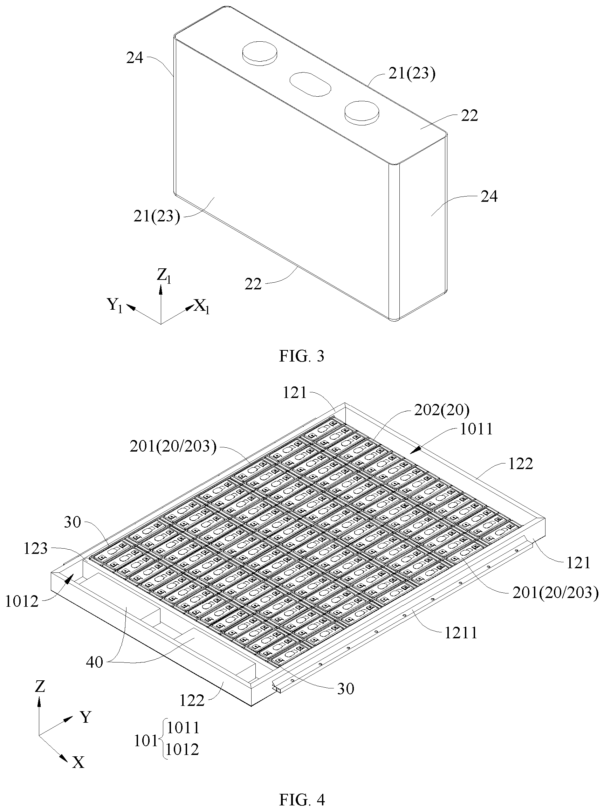

Referring to FIG. 3, FIG. 3 is a schematic structural diagram of a battery cell 20 according to some embodiments of the present application.

The battery cell 20 also has a height direction, a length direction, and a width direction. The height direction of the battery cell 20 may refer to a Z₁ direction, the width direction of the battery cell 20 may refer to an X₁ direction, and the length direction of the battery cell 20 may refer to a Y₁ direction. The battery cell 20 includes two first end surfaces 22 distributed in the height direction thereof, and the height of the battery cell 20 is defined between the two first end surfaces 22. The battery cell 20 includes two first side surfaces 23 distributed in the thickness direction thereof and two second side surfaces 24 distributed in the length direction thereof, the width of the battery cell 20 is defined between the two first side surfaces 23, and the length of the battery cell 20 is defined between the two second side surfaces 24. The area of the two first end surfaces 22 is defined by the length and width of the battery cell 20, the area of the first side surface 23 is defined by the height and length of the battery cell 20, and the area of the second side surface 24 is defined by the height and width of the battery cell 20. For a flat battery cell 20, such as a prismatic battery cell, its width is smaller than its length and height, and its first side surface 23 has the largest area, so the first side surface 23 is also called a large surface.

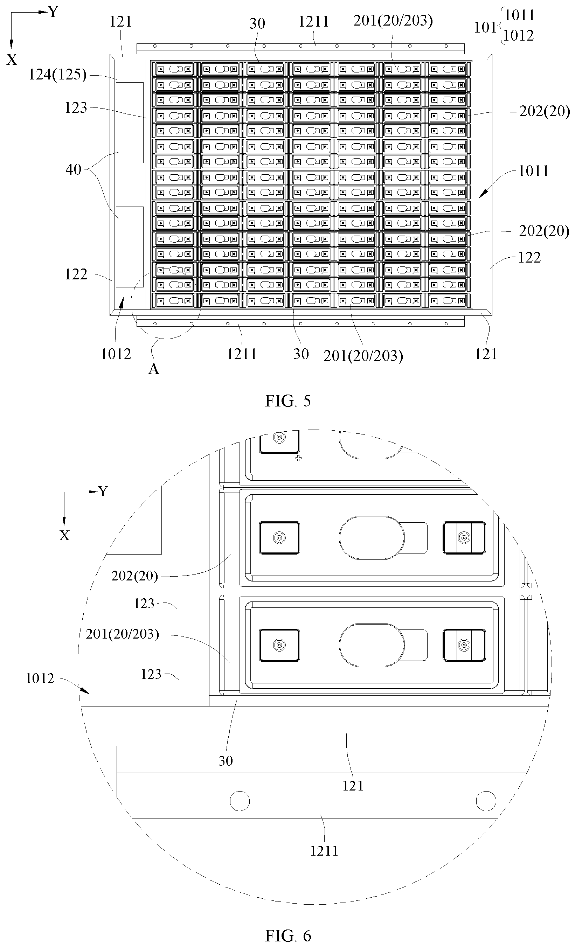

Referring to FIGs. 4 to 6 together, FIG. 4 is a schematic structural diagram of the battery 1100 shown in FIG. 2 from a perspective where a case cover 11 is hidden. FIG. 5 is a schematic structural diagram of the battery 1100 shown in FIG. 2 from another perspective where a case cover 11 is hidden. FIG. 6 is a partially enlarged view of the portion A in FIG. 5.

In some embodiments of the present application, a battery 1100 is provided. The battery 1100 includes a case 10, an insulating member 30, and at least one battery cell 20. The case 10 includes a first side beam 121 and a second side beam 122, and the first side beam 121 and the second side beam 122 are connected and define, in an enclosing manner, an accommodating space 101; the at least one battery cell 20 is located in the accommodating space 101, the battery cell 20 adjacent to the first side beam 121 is a first battery cell 201, a surface of the first battery cell 201 with a largest area is a first surface 21, and the first surface 21 of the first battery cell 201 is disposed facing the first side beam 121; the insulating member 30 is located in the accommodating space 101, and the insulating member 30 is disposed between the first battery cell 201 and the first side beam 121.

The case 10 may refer to a housing structure having the accommodating space 101. The battery cell 20 and the insulating member 30 are accommodated in the accommodating space 101, and the case 10 serves to protect the battery cell 20 and the insulating member 30. The case 10 may be of various structures. The accommodating space 101 may refer to a space in the case 10 for accommodating the battery cell 20 and the insulating member 30.

As an example, the case 10 may include a lower case body 12 and a case cover 11. The lower case body 12 and the case cover 11 are lidded with each other, and the lower case body 12 and the case cover 11 jointly define the accommodating space 101. The lower case body 12 may be of a hollow structure with one end open, and the case cover 11 may be of a plate-shaped structure. The open side of the lower case body 12 is lidded with the case cover 11, such that the lower case body 12 and the case cover 11 jointly define the accommodating space 101. Both the lower case body 12 and the case cover 11 may also be of hollow structures with one side open, and the open side of the case cover 11 is lidded with the open side of the lower case body 12. Certainly, the case 10 formed by the lower case body 12 and the case cover 11 may be of various shapes, such as a cylinder or a rectangular parallelepiped.

In some examples, the case 10 includes a first side beam 121 and a second side beam 122, and the first side beam 121 and the second side beam 122 are connected and define, in an enclosing manner, an accommodating space 101; that is, the first side beam 121 and the second side beam 122, after being connected to each other, can form a peripheral side wall of the accommodating space 101. The side wall on one side of the accommodating space 101 is the side beam. The side beam opposite to the first surface 21 of the first battery cell 201 is the first side beam 121, and the side beam opposite to the other surfaces of the first battery cell 201 is the second side beam 122. In the case that the lower case body 12 is of a hollow structure with one end open and the case cover 11 is of a plate-shaped structure, the side wall located on one side of the lower case body 12 is the side beam, the side beam opposite to the first surface 21 of the first battery cell 201 is the first side beam 121, and the side beam opposite to the other surfaces of the first battery cell 201 is the second side beam 122. In the case that both the lower case body 12 and the case cover 11 are of hollow structures with one side open, the side wall of the lower case body 12 and the side wall corresponding to the case cover 11 jointly form the side beam. The side beam opposite to the first surface 21 of the first battery cell 201 is the first side beam 121, and the side beam opposite to the other surfaces of the first battery cell 201 is the second side beam 122. The first side beam 121 and the second side beam 122 may be of a profile structure, a sheet metal structure, a die-cast structure, or the like. The number of the first side beams 121 may be one, two, or three, or more, and the number of the second side beams 122 may be one, two, three, four, five, or more, which may be specifically set depending on the shape of the case 10.

As an example, with reference to FIGs. 2, 4, and 5, two first side beams 121 are provided, and two second side beams 122 are provided. The two first side beams 121 and the two second side beams 122 are connected end to end to define, in an enclosing manner, a rectangular frame structure, and the internal space of the rectangular frame structure forms the accommodating space 101. The two first side beams 121 are located on the two opposite sides of the case 10 in the width direction of the battery 1100 and extend in the length direction of the battery 1100, and the two second side beams 122 are located on the two opposite sides of the case 10 in the length direction of the battery 1100 and extend in the width direction of the battery 1100.

The first battery cell 201 may refer to the battery cell 20 adjacent to the first side beam 121 in the battery 1100, that is, the battery cell 20 closest to the first side beam 121 in the battery 1100. In the case that the battery 1100 includes one battery cell 20, the battery cell 20 is the first battery cell 201. In the case that the battery 1100 includes a plurality of battery cells 20, the battery cell 20 closest to the first side beam 121 is the first battery cell 201. One or a plurality of first battery cells 201 may be provided.

As shown in FIGs. 2, 4, and 5, in the case that the first side beam 121 extends in the length direction of the battery 1100, the plurality of battery cells 20 can form a column of battery cells 20, the plurality of battery cells 20 in the column of battery cells 20 are disposed in the length direction of the battery 1100, and all the battery cells 20 in the column of battery cells 20 are first battery cells 201; the plurality of battery cells 20 in the column of battery cells 20 are disposed in the width direction of the battery 1100, and the battery cells 20 located at both ends of the column of battery cells 20 are first battery cells 201; the plurality of battery cells 20 can form a plurality of columns of battery cells 20, the plurality of columns of battery cells 20 are disposed in the width direction of the battery 1100, the plurality of battery cells 20 in each column of battery cells 20 are disposed in the length direction of the battery 1100, and the plurality of battery cells 20 in two opposite columns of battery cells 20 in the width direction of the battery 1100 are all first battery cells 201.

The first surface 21 may refer to the surface of the first battery cell 201 with the largest area. As an example, the first battery cell 201 may adopt the battery cell 20 shown in FIG. 3, and the first surface 21 of the first battery cell 201 may refer to the first side surface 23. Other battery cells 20 in the battery 1100, except for the first battery cell 201, may adopt the battery cell 20 shown in FIG. 3, or may adopt other types of battery cells 20.

With reference to FIGs. 2 and 3, the height direction of the first battery cell 201 is parallel to the height direction of the battery 1100, the width direction of the first battery cell 201 is parallel to the width direction of the battery 1100, and the length direction of the first battery cell 201 is parallel to the length direction of the battery 1100, such that the first side surface 23 (the first surface 21) of the first battery cell 201 is disposed opposite to the first side beam 121; that is, the first side surface 23 of the first battery cell 201 is disposed facing the first side beam 121. Certainly, in other examples, the first battery cell 201 may also be arranged in other ways.

The insulating member 30 may refer to a component having insulating property, and the insulating member 30 may be made of an insulating material, such as plastic, rubber, foam, foamed plastic, or composite insulating material. The insulating member 30 may be in a plate-shaped form, and the insulating member 30 may cover the first surface 21 of the first battery cell 201. The insulating member 30 may be of a single-layer structure or a multi-layer structure.

The insulating member 30 is disposed between the first battery cell 201 and the first side beam 121. It can be understood that the insulating member 30 is located between the first side beam 121 and the first battery cell 201, which can achieve insulation and separation between the first side beam 121 and the first battery cell 201, thereby reducing the risk of short circuit of the first battery cell 201 and helping to improve the service reliability of the battery 1100. In addition, the first surface 21 of the first battery cell 201 is disposed facing the first side beam 121; that is, the insulating member 30 is located between the first surface 21 of the first battery cell 201 and the first side beam 121. The insulating member 30 may be located between the plurality of first battery cells 201 and the first side beam 121, or the insulating member 30 may be located between one first battery cell 201 and the first side beam 121.

In the battery 1100 according to the embodiments of the present application, the case 10 includes the first side beam 121 and the second side beam 122. The first side beam 121 and the second side beam 122 are connected and define, in an enclosing manner, the accommodating space 101. The battery cell 20 and the insulating member 30 are both located in the accommodating space 101. The battery cell 20 adjacent to the first side beam 121 is the first battery cell 201, and the surface of the first battery cell 201 with the largest area is the first surface 21. The first surface 21 of the first battery cell 201 is disposed facing the first side beam 121, and the insulating member 30 is disposed between the first battery cell 201 and the first side beam 121, such that when the first side beam 121 is subjected to an impact, the impact is borne by the first surface 21 of the first battery cell 201. Since the first surface 21 of the first battery cell 201 allows a greater intrusion than other surfaces of the first battery cell 201, and the risk of short circuit of the first battery cell 201 is low, the service reliability of the battery 1100 can be improved. In addition, during the impact, since the insulating member 30 is located between the first battery cell 201 and the insulating member 30, the insulating member 30 can also bear a certain impact force, thereby protecting the first battery cell 201, reducing the impact-induced deformation of the first battery cell 201, reducing the risk of short circuit of the first battery cell 201, and further improving the service reliability of the battery 1100.

In some embodiments, with reference to FIG. 2, the battery 1100 further includes a busbar component 50, and the plurality of battery cells 20 are connected in parallel, in series, or in series-parallel via the busbar component 50. The busbar component 50 may be, but is not limited to, a conductive member such as a copper busbar or an aluminum busbar.

In some other embodiments of the present application, as shown in FIGs. 4 and 5, the length of the first side beam 121 is greater than the length of the second side beam 122.

The length of the first side beam 121 may refer to the distance between two opposite end surfaces of the first side beam 121 in the length direction.

The length of the second side beam 122 may refer to the distance between two opposite end surfaces of the second side beam 122 in the length direction.

The length of the first side beam 121 is greater than the length of the second side beam 122. The first side beam 121 may refer to the longer side beam in the case 10, and the second side beam 122 may refer to the shorter side beam in the case 10. As an example, in the case that the length of the battery 1100 is greater than the width of the battery 1100, the first side beam 121 may refer to the side beam extending in the length direction of the battery 1100, and the second side beam 122 may refer to the side beam extending in the width direction of the battery 1100.

In general, the length of the first side beam 121 is longer, and the first side beam 121 exhibits larger impact-induced deformation. Compared with the battery cell 20 adjacent to the second side beam 122, the first battery cell 201 exhibits larger impact-induced deformation, making it more susceptible to the risk of short circuit.

By adopting the technical solution of the embodiments, the length of the first side beam 121 is greater than the length of the second side beam 122, while the first surface 21 of the first battery cell 201 faces the first side beam 121. In addition, the insulating member 30 is disposed between the first side beam 121 and the first battery cell 201, which can better reduce the impact-induced deformation of the first battery cell 201, reduce the risk of short circuit of the first battery cell 201, and improve the service reliability of the battery 1100.

In some other embodiments of the present application, with reference to FIG. 6, one side of the insulating member 30 abuts against the first battery cell 201, and/or the other side of the insulating member 30 abuts against the first side beam 121.

In a possible embodiment, one side of the insulating member 30 abuts against the first battery cell 201. It can be understood that the side portion of the insulating member 30 may directly abut against the first battery cell 201, or the side portion of the insulating member 30 may abut against the first battery cell 201 through a component such as an adhesive (such as a structural adhesive). The insulating member 30 can be supported by the first battery cell 201, such that the insulating member 30 can bear a greater impact force, which is beneficial for reducing the risk of deformation of the first battery cell 201. With one side of the insulating member 30 abutting against the first battery cell 201, the internal space of the battery 1100 can be saved, thereby helping to improve the volumetric energy density of the battery 1100.

In another possible embodiment, the other side of the insulating member 30 abuts against the first side beam 121. It can be understood that the side wall of the insulating member 30 may directly abut against the first battery cell 201, or the side wall of the insulating member 30 may abut against the first battery cell 201 through a component such as an adhesive (such as a structural adhesive). The insulating member 30 can be supported by the first side beam 121, such that the insulating member 30 can bear a greater impact force, which is beneficial for reducing the risk of deformation of the first battery cell 201 and improving the service reliability of the battery 1100. With one side of the insulating member 30 abutting against the first side beam 121, the internal space of the battery 1100 can be saved, thereby helping to improve the volumetric energy density of the battery 1100.

In yet another possible embodiment, one side of the insulating member 30 abuts against the first battery cell 201, and the other side of the insulating member 30 abuts against the first side beam 121. It can be understood that the insulating member 30 is clamped between the first battery cell 201 and the first side beam 121, such that the insulating member 30 can be stably fixed between the first battery cell 201 and the first side beam 121, enabling the insulating member 30 to bear a greater impact force, thereby helping to reduce the risk of deformation of the first battery cell 201 and improving the service reliability of the battery 1100. With the insulating member 30 clamped between the first battery cell 201 and the first side beam 121, the internal space of the battery 1100 can be saved, thereby helping to improve the volumetric energy density of the battery 1100. In addition, during the charging and discharging process of the first battery cell 201, the first surface 21 of the first battery cell 201 expands, while the first surface 21 of the first battery cell 201 abuts against the first side beam 121 through the insulating member 30, such that the first side beam 121 can limit the expansion of the first surface 21 of the first battery cell 201, thereby improving the charging and discharging performance of the first battery cell 201.

By adopting the technical solution of the embodiments, the insulating member 30 abuts against the first battery cell 201 and/or the first side beam 121, such that the insulating member 30 can bear a greater impact force, thereby reducing the risk of deformation and short circuit of the first battery cell 201 and improving the service reliability of the battery 1100. In addition, the internal space of the battery 1100 can also be saved, and the volumetric energy density of the battery 1100 can be improved.

In some other embodiments of the present application, the insulating member 30 is fixedly connected to the first battery cell 201 and the first side beam 121.

It can be understood that the insulating member 30 fixedly connects the first battery cell 201 and the first side beam 121 together to form an integral structure. The insulating member 30 may fixedly connect the first battery cell 201 and the first side beam 121 by means of a screw joint structure, a snap-fit connection structure, an adhesive structure, or the like.

By adopting the technical solution of the embodiments, the first battery cell 201 and the first side beam 121 are fixedly connected through the insulating member 30, and the insulating member 30 can improve the connection strength between the first battery cell 201 and the first side beam 121, thereby helping to improve the structural strength and rigidity of the battery 1100 and further improving the service reliability of the battery 1100.

In some other embodiments of the present application, with reference to FIG. 6, one side of the insulating member 30 is bonded to the first battery cell 201; and/or the other side of the insulating member 30 is bonded to the first side beam 121.

In a possible embodiment, one side of the insulating member 30 is bonded to the first battery cell 201. It can be understood that the side portion of the insulating member 30 is bonded to the first battery cell 201 by means of an adhesive. The adhesive may be a structural adhesive, which refers to an adhesive having high strength, weather resistance, and aging resistance, and is mainly used for fixing and connecting various materials to enhance the stability and integrity of the structure. The adhesive may be, but is not limited to, an epoxy resin adhesive, a silicone rubber adhesive, a polyurethane adhesive, an acrylate adhesive, or a polyvinyl acetal adhesive. The insulating member 30 and the first battery cell 201 may be bonded by means of an adhesive, which features a simple bonding operation and thus helps to improve the production efficiency of the battery 1100.

In another possible embodiment, the other side of the insulating member 30 is bonded to the first side beam 121. It can be understood that the side portion of the insulating member 30 is bonded to the first side beam 121 by means of an adhesive, and the insulating member 30 and the first side beam 121 may be bonded by means of an adhesive, which features a simple bonding operation and thus helps to improve the production efficiency of the battery 1100.

In yet another possible embodiment, one side of the insulating member 30 is bonded to the first battery cell 201; the other side of the insulating member 30 is bonded to the first side beam 121, and the insulating member 30 is bonded between the first battery cell 201 and the first side beam 121 by means of an adhesive, which features a simple bonding operation and thus helps to improve the production efficiency of the battery 1100.

By adopting the technical solution of the embodiments, the insulating member 30 is connected by means of bonding, which features a simple bonding operation and thus helps to improve the production efficiency of the battery 1100.

In a low-temperature environment, the chemical reaction rate of the battery cell 20 decreases, resulting in a reduction in the discharge capacity and power output capacity of the battery cell 20. In particular, the heat of the battery cell 20 adjacent to the side beam of the case 10 is more easily transferred to the outside of the battery 1100 through the side beam, resulting in a relatively lower temperature of the battery cell 20 adjacent to the side beam of the case 10. This makes the battery cell 20 adjacent to the side beam of the case 10 more susceptible to the low-temperature environment, thereby affecting the overall charging and discharging performance of the battery 1100.

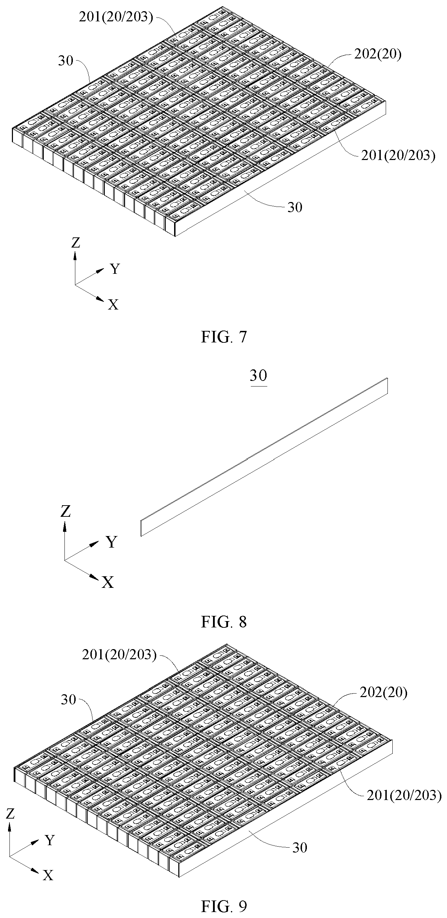

Referring to FIGs. 7 and 8 together, FIG. 7 is a schematic structural diagram of the battery 1100 shown in FIG. 2 with a case 10 hidden. FIG. 8 is a schematic structural diagram of the insulating member 30 shown in FIG. 7.

In some other embodiments of the present application, with reference to FIGs. 7 and 8, the insulating member 30 is an elastic insulating member or a rigid insulating member; and/or the insulating member 30 is a heat insulating member.

In a possible embodiment, the insulating member 30 is an elastic insulating member. It can be understood that the insulating member 30 is made of an elastic insulating material, such that the insulating member 30 has a certain elastic force. In one aspect, during the charging and discharging process of the first battery cell 201, the first surface 21 may compress and deform the insulating member 30, thereby providing expansion space for the expansion of the first battery cell 201 and helping to improve the charging and discharging performance of the first battery cell 201; in another aspect, the insulating member 30 can better absorb the impact force through elastic deformation, thereby reducing the impact force acting on the first battery cell 201 and helping to improve the service reliability of the battery 1100.

The elastic insulating material may be, but is not limited to, elastic plastic (for example, rubber or silica gel) or an elastic composite material (for example, a rubber composite material, a polyurethane composite material, a polyethylene composite material, a polypropylene composite material, or a fluororubber composite material).

The insulating member 30 may refer to a single-layer structure made of an elastic insulating member, or the insulating member 30 may be of a multi-layer structure, in which one layer of the insulating member 30 is made of an elastic insulating member material.

In another possible embodiment, the insulating member 30 is a rigid insulating member. It can be understood that the insulating member 30 is made of a rigid insulating material, and the insulating member 30 exhibits good structural strength, which can provide good protection for the first battery cell 201 and help to improve the service reliability of the battery 1100.

The rigid insulating material may be, but is not limited to, a rigid rubber material (for example, silicon rubber and ethylene propylene diene monomer (EPDM)), a rigid insulating composite material (for example, a silicon carbide composite material, a zirconium oxide composite material, or a ceramic composite material), and a rigid foamed material (for example, foamed plastic or foamed polyurethane). When the insulating member 30 is made of a rigid plastic material, the insulating member 30 may be formed by processes such as injection molding, extrusion, or machining.

In yet another possible embodiment, the insulating member 30 is a heat insulating member. It can be understood that the insulating member 30 is made of an insulating material having heat insulation performance. Under a low-temperature environment, the heat insulating member can reduce the heat transfer between the first side beam 121 and the first battery cell 201, thereby reducing the impact of the low-temperature environment on the first battery cell 201 and improving the heat preservation performance and overall charging and discharging performance of the battery 1100. The insulating member 30 may be made of a material such as a rigid foamed material (for example, foamed plastic or foamed polyurethane).

In yet another possible embodiment, the insulating member 30 is both an elastic insulating member and a heat insulating member; that is, the insulating member 30 is made of an insulating material having both elasticity and heat insulation performance, such that the insulating member 30 can provide both buffering and heat insulation functions to improve the performance of the battery 1100. For example, the insulating material may be, but is not limited to, polyimide or a polyethylene composite material.

In yet another possible embodiment, the insulating member 30 is both a rigid insulating member and a heat insulating member; that is, the insulating member 30 is made of a rigid insulating material having heat insulation performance, such that the insulating member 30 can provide both protection and heat insulation functions to improve the performance of the battery 1100. For example, the rigid insulating material may be, but is not limited to, a rigid foamed material (such as foamed plastic or foamed polyurethane).

By adopting the technical solution of the embodiments, in the case that the insulating member 30 is an elastic insulating member, the insulating member 30 can also play a buffering role. In one aspect, it can buffer the expansion and deformation of the first battery cell 201, and in another aspect, it can also buffer the impact, thereby reducing the impact-induced deformation of the first battery cell 201 and helping to improve the service reliability of the battery 1100. In the case that the insulating member 30 is a rigid insulating member, the rigid insulating member can protect the first battery cell 201, thereby reducing the impact-induced deformation of the first battery cell 201 and improving the service reliability of the battery 1100. In the case that the insulating member 30 is a heat insulating member, the insulating member 30 can provide heat insulation, thereby reducing the impact of the low-temperature environment on the first battery cell 201 and improving the heat preservation performance and overall charging and discharging performance of the battery 1100.

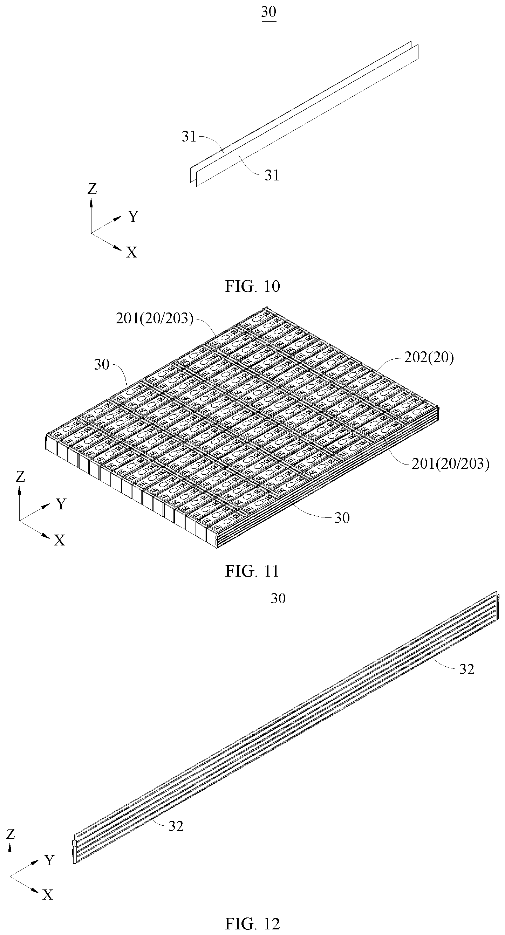

Referring to FIGs. 9 and 10 together, FIG. 9 is a schematic structural diagram of a battery 1100 with a case 10 hidden according to some embodiments of the present application. FIG. 10 is a schematic diagram of an exploded structure of the insulating member 30 shown in FIG. 9.

In some other embodiments of the present application, with reference to FIGs. 9 and 10, the insulating member 30 includes a plurality of layer bodies 31. The plurality of layer bodies 31 are stacked in a first direction, and the first direction is a distribution direction of the battery cell 20 and the first side beam 121. The plurality of layer bodies 31 include at least one of an elastic insulating layer and a rigid insulating layer; and/or, the plurality of layer bodies 31 include a heat insulating layer.

The insulating member 30 is of a multi-layer structure, in which one layer of the multi-layer structure forms a layer body 31. The plurality of layer bodies 31 are stacked in the first direction to form the insulating member 30. The layer body 31 may be in a sheet shape, and the plurality of layer bodies 31 are stacked and cover the first surface 21 of the first battery cell 201. The first direction may refer to the distribution direction of the first battery cell 201 and the first side beam 121. Referring to FIG. 10, the distribution direction of the first battery cell 201 and the first side beam 121 is parallel to the width direction of the battery 1100; that is, the first direction may also refer to the width direction of the battery 1100. The number of the layer bodies 31 may be two, three, four, or more, which may be specifically set depending on the design of the battery 1100.

The elastic insulating layer may refer to a component made of an elastic insulating material.

The rigid insulating layer may refer to a component made of a rigid insulating material.

The heat insulating layer may refer to a component made of an insulating material having heat insulation performance.

In a possible embodiment, the plurality of layer bodies 31 include an elastic insulating layer. That is, at least one layer body 31 of the plurality of layer bodies 31 is an elastic insulating layer. In the plurality of layer bodies 31, one or a plurality of elastic insulating layers may be provided. In the case that the insulating member 30 includes a plurality of elastic insulating layers, the plurality of elastic insulating layers may be made of the same material or different materials.

The arrangement of the elastic insulating layer can enable the insulating member 30 to have a buffering performance, which can provide a buffer space for the expansion of the first battery cell 201, thereby improving the service reliability of the first battery cell 201. In addition, the elastic insulating layer can better absorb the impact force through elastic deformation, thereby reducing the impact force acting on the first battery cell 201 and helping to improve the service reliability of the battery 1100.

In another possible embodiment, the plurality of layer bodies 31 include a rigid insulating layer. That is, at least one layer body 31 of the plurality of layer bodies 31 is a rigid insulating layer. In the plurality of layer bodies 31, one or a plurality of rigid insulating layers may be provided. In the case that the insulating member 30 includes a plurality of rigid insulating layers, the plurality of rigid insulating layers may be made of the same material or different materials.

The arrangement of the rigid insulating layer can improve the structural strength of the insulating member 30, and the insulating member 30 provides good protection for the first battery cell 201, which can reduce the impact-induced deformation of the first battery cell 201, reduce the risk of short circuit, and improve the service reliability of the battery 1100.

In yet another possible embodiment, the plurality of layer bodies 31 include an elastic insulating layer and a rigid insulating layer. That is, at least one layer body 31 of the plurality of layer bodies 31 is a rigid insulating layer, and at least one layer body 31 of the plurality of layer bodies 31 is an elastic insulating layer. In the plurality of layer bodies 31, one or a plurality of elastic insulating layers may be provided. In the case that the insulating member 30 includes a plurality of elastic insulating layers, the plurality of elastic insulating layers may be made of the same material or different materials. In the plurality of layer bodies 31, one or a plurality of rigid insulating layers may be provided. In the case that the insulating member 30 includes a plurality of rigid insulating layers, the plurality of rigid insulating layers may be made of the same material or different materials. For example, the insulating member 30 may be a composite of elastic plastic and rigid rubber, a composite of a rigid composite material and elastic plastic, a composite of elastic plastic and a rigid foamed material, a composite of an elastic composite material and rigid rubber, a composite of an elastic composite material and a rigid foamed material, a composite of an elastic composite material and a rigid composite material, or the like.

The arrangement of the elastic insulating layer and the rigid insulating layer enables the insulating member 30 to possess the performance of both the elastic insulating layer and the rigid insulating layer, which can also better reduce the impact-induced deformation of the first battery cell 201 and improve the service reliability of the battery 1100.

In yet another possible embodiment, the plurality of layer bodies 31 include a heat insulating layer. That is, at least one layer body 31 of the plurality of layer bodies 31 is a heat insulating layer. In the plurality of layer bodies 31, one or a plurality of heat insulating layers may be provided. In the case that the insulating member 30 includes a plurality of heat insulating layers, the plurality of heat insulating layers may be made of the same material or different materials.

The arrangement of the heat insulating layer enables the insulating member 30 to possess the heat insulation performance, which can reduce the heat transfer from the first battery cell 201 to the outside through the first side beam 121. This is beneficial for reducing the impact of the low temperature on the first battery cell 201 and improving the heat preservation performance and overall charging and discharging performance of the battery 1100.

In yet another possible embodiment mode, the plurality of layer bodies 31 include an elastic insulating layer and a heat insulating layer. As an example, at least one layer body 31 of the plurality of layer bodies 31 is a heat insulating layer, and at least one layer body 31 of the plurality of layer bodies 31 is an elastic insulating layer.

In the plurality of layer bodies 31, one or a plurality of elastic insulating layers may be provided. In the case that the insulating member 30 includes a plurality of elastic insulating layers, the plurality of elastic insulating layers may be made of the same material or different materials.

In the plurality of layer bodies 31, one or a plurality of heat insulating layers may be provided. In the case that the insulating member 30 includes a plurality of heat insulating layers, the plurality of heat insulating layers may be made of the same material or different materials. For example, the insulating member 30 may be a composite of an elastic composite material and a foamed material, a composite of elastic rigid plastic and foamed plastic, or the like. For example, the insulating member 30 may be a composite of elastic plastic and a rigid foamed material, a composite of an elastic composite material and a rigid foamed material, or the like.

As another example, at least one layer body 31 of the plurality of layer bodies 31 is both an elastic insulating layer and a heat insulating layer; that is, these layer bodies 31 are made of an elastic insulating material having heat insulation performance, such that the insulating member 30 can provide both buffering and heat insulation functions to improve the performance of the battery 1100.

In the plurality of layer bodies 31, one or a plurality of layer bodies 31 having both elasticity and heat insulation performance may be provided. In the case that the insulating member 30 includes a plurality of layer bodies 31 having both elasticity and heat insulation performance, the plurality of layer bodies 31 having both elasticity and heat insulation performance may be made of the same material or different materials. For example, these layer bodies 31 may be made of materials such as polyimide and a polyethylene composite material.

The arrangement of the elastic insulating layer and the heat insulating layer enables the insulating member 30 to possess the performance of both the elastic insulating layer and the heat insulating layer, and the insulating member 30 provides both buffering and heat insulation functions, which can improve the service reliability, heat preservation performance, and overall charging and discharging performance of the battery 1100.

In yet another possible embodiment mode, the plurality of layer bodies 31 include a rigid insulating layer and a heat insulating layer. As an example, at least one layer body 31 of the plurality of layer bodies 31 is a heat insulating layer, and at least one layer body 31 of the plurality of layer bodies 31 is a rigid insulating layer.

In the plurality of layer bodies 31, one or a plurality of rigid insulating layers may be provided. In the case that the insulating member 30 includes a plurality of rigid insulating layers, the plurality of rigid insulating layers may be made of the same material or different materials.

In the plurality of layer bodies 31, one or a plurality of heat insulating layers may be provided. In the case that the insulating member 30 includes a plurality of heat insulating layers, the plurality of heat insulating layers may be made of the same material or different materials. For example, the insulating member 30 may be a composite of rigid rubber and a rigid foamed material, or a composite of a rigid composite material and a rigid foamed material.

As another example, the situation may be that at least one layer body 31 of the plurality of layer bodies 31 is both a rigid insulating layer and a heat insulating layer; that is, these layer bodies 31 are made of a rigid insulating material having heat insulation performance. This enables the insulating member 30 to provide good protection for the first battery cell 201 while also offering heat insulation, thereby improving the performance of the battery 1100.

In the plurality of layer bodies 31, one or a plurality of rigid layer bodies 31 having heat insulation performance may be provided. In the case that the insulating member 30 includes a plurality of rigid layer bodies 31 having heat insulation performance, the plurality of rigid layer bodies 31 having heat insulation performance may be made of the same material or different materials. For example, the layer bodies 31 may be made of a rigid foamed material.

The arrangement of the rigid insulating layer and the heat insulating layer enables the insulating member 30 to possess the performance of both the rigid insulating layer and the heat insulating layer. On the basis that the insulating member 30 provides good protection for the first battery cell 201, the insulating member 30 also exhibits heat insulation performance, which can improve the service reliability, heat preservation performance, and overall charging and discharging performance of the battery 1100.

In yet another possible embodiment, the plurality of layer bodies 31 include a rigid insulating layer, an elastic insulating layer, and a heat insulating layer. As an example, at least one layer body 31 of the plurality of layer bodies 31 is a heat insulating layer, at least one layer body 31 of the plurality of layer bodies 31 is a rigid insulating layer, and at least one layer body 31 of the plurality of layer bodies 31 is an elastic insulating layer.

In the plurality of layer bodies 31, one or a plurality of rigid insulating layers may be provided. In the case that the insulating member 30 includes a plurality of rigid insulating layers, the plurality of rigid insulating layers may be made of the same material or different materials.

In the plurality of layer bodies 31, one or a plurality of heat insulating layers may be provided. In the case that the insulating member 30 includes a plurality of heat insulating layers, the plurality of heat insulating layers may be made of the same material or different materials.

In the plurality of layer bodies 31, one or a plurality of elastic insulating layers may be provided. In the case that the insulating member 30 includes a plurality of elastic insulating layers, the plurality of elastic insulating layers may be made of the same material or different materials.

As another example, at least one layer body 31 of the plurality of layer bodies 31 is both an elastic insulating layer and a heat insulating layer; that is, these layer bodies 31 are made of a rigid insulating material having heat insulation performance, such that the insulating member 30 can provide both buffering and heat insulation functions to improve the performance of the battery 1100.

In the plurality of layer bodies 31, one or a plurality of layer bodies 31 having both elasticity and heat insulation performance may be provided. In the case that the insulating member 30 includes a plurality of layer bodies 31 having both elasticity and heat insulation performance, the plurality of layer bodies 31 having both elasticity and heat insulation performance may be made of the same material or different materials.

As yet another example, at least one layer body 31 of the plurality of layer bodies 31 is both an elastic insulating layer and a heat insulating layer; that is, these layer bodies 31 are made of a rigid insulating material having heat insulation performance, such that the insulating member 30 can provide both buffering and heat insulation functions to improve the performance of the battery 1100.

In the plurality of layer bodies 31, one or a plurality of layer bodies 31 having both elasticity and heat insulation performance may be provided. In the case that the insulating member 30 includes a plurality of layer bodies 31 having both elasticity and heat insulation performance, the plurality of layer bodies 31 having both elasticity and heat insulation performance may be made of the same material or different materials.

The arrangement of the elastic insulating layer and the heat insulating layer enables the insulating member 30 to possess the performance of both the elastic insulating layer and the heat insulating layer, and the insulating member 30 provides both buffering and heat insulation functions, which can improve the service reliability, heat preservation performance, and overall charging and discharging performance of the battery 1100.

The arrangement of the elastic insulating layer, the rigid insulating layer, and the heat insulating layer enables the insulating member 30 to possess the performance of the rigid insulating layer, the elastic insulating layer, and the heat insulating layer at the same time. On the basis that the insulating member 30 provides good protection for the first battery cell 201, the insulating member 30 also provides buffering and heat insulation functions, which can effectively improve the service reliability of the battery 1100, and improve the heat preservation performance and overall charging and discharging performance of the battery 1100.

By adopting the technical solution of the embodiments, the insulating member 30 may be of a multi-layer structure, and the insulating member 30 exhibits good structural strength. The material of each layer body 31 may also be flexibly configured based on actual needs, such that the insulating member 30 has different properties to better improve the service reliability and performance of the battery 1100.

Referring to FIGs. 11 and 12 together, FIG. 11 is a schematic structural diagram of a battery 1100 with a case 10 hidden according to some other embodiments of the present application. FIG. 12 is a schematic structural diagram of the insulating member 30 shown in FIG. 11.

In some other embodiments of the present application, as shown in FIGs. 11 and 12, a protrusion 32 is provided on a surface of the insulating member 30 facing the first side beam 121.

The protrusion 32 may refer to a structure of the protrusion 32 formed on an insulating surface facing the first side beam 121.

By adopting the technical solution of the embodiments, the arrangement of the protrusion 32 enables a deformation space to be formed between the insulating member 30 and the first side beam 121 to accommodate the impact-induced deformation of the first side beam 121, so as to buffer the impact of the first side beam 121 on the insulating member 30, thereby reducing the risk of impact-induced deformation of the first battery cell 201, reducing the risk of short circuit, and improving the service reliability of the battery 1100.

In some other embodiments of the present application, a plurality of protrusions 32 are provided, and the plurality of protrusions 32 are spaced apart from each other in the height direction of the first battery cell 201.

The height direction of the first battery cell 201 may be parallel to the height direction of the battery 1100, and the plurality of protrusions 32 may be evenly distributed in the height direction of the first battery cell 201. As an example, the protrusion 32 may extend in the length direction of the first battery cell 201. Certainly, in other examples, the protrusion 32 may also extend in other directions.

By adopting the technical solution of the embodiments, the plurality of protrusions 32 can form a multi-point buffer, in the height direction of the first battery cell 201, against the impact exerted by the first side beam 121 on the insulating member 30, thereby better reducing the impact force acting on the first battery cell 201, reducing the risk of impact-induced deformation of the first battery cell 201, reducing the risk of short circuit, and improving the service reliability of the battery 1100.

In some other embodiments of the present application, as shown in FIGs. 4 and 5, a plurality of first battery cells 201 are provided, the plurality of first battery cells 201 are disposed in a second direction, and the second direction is parallel to the first surface 21: at least two first battery cells 201 are connected to the insulating member 30.

The second direction may refer to the direction parallel to the first surface 21. Referring to FIG. 4, the first surface 21 is parallel to the length direction of the battery 1100, or the second direction may refer to the length direction of the battery 1100. The plurality of battery cells 20 in a column of battery cells 20 adjacent to the first side beam 121 are all first battery cells 201.

At least two first battery cells 201 are connected to the insulating member 30. It can be understood that two or more first battery cells 201 in the column of battery cells 20 adjacent to the first side beam 121 are connected to the insulating member 30. The first battery cells 201 connected to the insulating member 30 may be a plurality of adjacently arranged first battery cells 201, or may be a plurality of non-adjacently arranged battery cells 20.

By adopting the technical solution of the embodiments, the insulating member 30 can connect the plurality of first battery cells 201 together to form a whole, which can improve the structural strength of the plurality of first battery cells 201, thereby helping to reduce the impact-induced deformation of the first battery cells 201 and improving the service reliability of the battery 1100.

In some other embodiments of the present application, a projection of the insulating member 30 in the first direction at least partially overlaps with projections of the first surfaces 21 of the at least two first battery cells 201 in the first direction, and the first direction is perpendicular to the first surfaces 21.

It can be understood that the insulating member 30 may cover at least part of the first surfaces 21 of the at least two first battery cells 201. A partial region of the first surface 21 of the first battery cell 201 is covered with the insulating member 30, and another partial region of the first surface 21 of the first battery cell 201 is not covered with the insulating member 30, or the insulating member 30 may cover the entire region of the first surface 21 of the first battery cell 201. The insulating member 30 may cover the first surfaces 21 of two or more first battery cells 201, or the insulating member 30 may cover the first surfaces 21 of all the first battery cells 201.

The first direction may refer to a surface perpendicular to the first surface 21. Referring to FIGs. 2 and 3, the width direction of the battery 1100 is perpendicular to the first surface 21, the first direction may refer to the width direction of the battery 1100, the width direction of the battery cell 20 is also perpendicular to the first surface 21, and the first direction may also refer to the width direction of the battery cell 20.

By adopting the technical solution of the embodiments, the insulating member 30 can also protect the plurality of first battery cells 201, which also helps to reduce the risk of short circuit of the first battery cells 201 and improves the service reliability of the battery 1100.

In some other embodiments of the present application, as shown in FIGs. 5 and 6, the first side beam 121 is provided with a mounting structure 1211 configured to achieve mounting of the battery 1100.

It can be understood that the mounting structure 1211 may refer to a structure provided on the first side beam 121 for securing the battery 1100 to the vehicle 1000. In general, the structural strength of the first side beam 121 provided with the mounting structure 1211 is superior to that of other side beams, so as to achieve stable mounting of the battery 1100. As an example, the mounting structure 1211 may be a mounting beam disposed on the first side beam 121, and the mounting beam may be integrally formed with the first side beam 121 or may be a separately formed component, and the mounting beam is connected to the first side beam 121 through a connection structure. The mounting beam may be provided with connecting holes, through which a connecting component is connected to the body or frame of the vehicle 1000 to achieve mounting of the battery 1100. The connecting component may be a bolt, a screw, or the like. In the case that the first side beam 121 extends in the length direction of the battery 1100, the mounting beam extends in the length direction of the battery 1100. In this way, the structural strength of the first side beam 121 provided with the mounting beam can be effectively enhanced.

By adopting the technical solution of the embodiments, the first side beam 121 provided with the mounting structure 1211 exhibits good structural strength, such that the first side beam 121 provided with the mounting structure 1211 can better protect the first battery cell 201, thereby effectively reducing the impact-induced deformation of the first battery cell 201, reducing the risk of short circuit of the first battery cell 201, and improving the service reliability of the battery 1100.

In some embodiments, in the case that the first surface 21 of the first battery cell 201 abuts against the first side beam 121 through the insulating member 30, the first side beam 121 provided with the mounting structure 1211 exhibits good structural strength, such that the first side beam 121 provided with the mounting structure 1211 can effectively limit the expansion and deformation of the battery cell 20. As a result, the expansion beam and the anti-expansion tie bar in the case 10 can be eliminated, thereby reducing the manufacturing cost of the case 10 and improving the volumetric energy density of the battery 1100.

In some other embodiments of the present application, as shown in FIGs. 5 and 6, two first side beams 121 are provided, the two first side beams 121 are disposed opposite to each other, and the battery cell 20 is located between the two first side beams 121. The insulating member 30 is disposed between one of the first side beams 121 and the corresponding first battery cell 201, and the insulating member 30 is disposed between the other first side beam 121 and the corresponding first battery cell 201.

The two first side beams 121 are spaced apart from each other, and the battery cell 20 is located in the gap between the two first side beams 121. In the case that one battery cell 20 is provided, the battery cell 20 is located in the gap between the two first side beams 121, and insulating members 30 are disposed between the battery cell 20 and each of the two first side beams 121; in the case that a plurality of battery cells 20 are provided, the plurality of battery cells 20 are located between the two first side beams 121, the insulating member 30 is disposed between a battery cell 20 adjacent to one of the first side beams 121 (i.e., a first battery cell 201) and this first side beam 121, and the insulating member 30 is disposed between a battery cell 20 adjacent to the other first side beam 121 (i.e., a first battery cell 201) and the corresponding first side beam 121.

As shown in FIG. 5, the two first side beams 121 are spaced apart from each other in the width direction of the battery 1100, the plurality of battery cells 20 are divided into a plurality of columns of battery cells 20, the plurality of battery cells 20 in each column of battery cells 20 are disposed in the length direction of the battery 1100, and the plurality of columns of battery cells 20 are disposed in the width direction of the battery 1100; the insulating member 30 is disposed between one column of battery cells 20 adjacent to one of the first side beams 121 and the corresponding first side beam 121, and the insulating member 30 is disposed between one column of battery cells 20 adjacent to the other first side beam 121 and the corresponding first side beam 121. That is, the plurality of battery cells 20 in two opposite columns of battery cells 20 in the width direction of the battery 1100 are all first battery cells 201, and insulating members 30 are disposed between each of the two columns of first battery cells 201 and their respective first side beam 121.

By adopting the technical solution of the embodiments, the first surface 21 of the first battery cell 201 and the insulating member 30 jointly bear the impact in the process of impacting, from the two opposite sides of the battery 1100, the corresponding first side beam 121. This can reduce the impact-induced deformation of the first battery cell 201, effectively reduce the risk of short circuit of the first battery cell 201, and improve the service reliability of the battery 1100.

In some other embodiments of the present application, as shown in FIG. 5, a plurality of first battery cells 201 are provided, the plurality of battery cells 20 include a type-I battery cell 202 and a type-II battery cell 203, at least the first battery cells 201 are the type-II battery cells 203, and the energy density of the type-II battery cell 203 is greater than the energy density of the type-I battery cell 202.

In the plurality of battery cells 20, a portion of the battery cells 20 are the type-I battery cells 202, another portion of the battery cells 20 are the type-II battery cells 203, and the battery cells 20 adjacent to the first side beam 121 (i.e., the first battery cells 201) are the type-II battery cells 203. Among the battery cells 20 other than the first battery cells 201, the situation may be that a portion of the battery cells 20 are the type-II battery cells 203, and another portion of the battery cells 20 are the type-I battery cells 202, or all are the type-I battery cells 202.

As shown in FIG. 5, the plurality of battery cells 20 in one column of battery cells 20 adjacent to the first side beam 121 are all type-II battery cells 203, and the battery cells 20 in the other columns of battery cells 20 are all type-I battery cells 202; that is, in the width direction of the battery cells 20, the battery cells 20 located on both sides are all type-II battery cells 203, and the other battery cells 20 are all type-I battery cells 202. Certainly, in other embodiments, the battery cells 20 in two or more columns of battery cells 20 adjacent to the first side beam 121 are type-II battery cells 203, and the battery cells 20 in the other columns of battery cells 20 are type-I battery cells 202.

The energy density of the battery cell 20 may be volumetric energy density or gravimetric energy density. In the present application, the energy density of the type-II battery cell 203 is greater than the energy density of the type-I battery cell 202. In an example, the volumetric energy density E1 of the type-I battery cell 202 may be within a range of, for example, 200 to 450 Wh/L. In an example, the volumetric energy density E2 of the type-II battery cell 203 may be within a range of, for example, 450 to 750 Wh/L. In an example, the gravimetric energy density G1 of the type-I battery cell 202 may be within a range of, for example, 100 to 220 Wh/Kg. In an example, the gravimetric energy density G2 of the type-II battery cell 203 may be within a range of, for example, 220 to 350 Wh/Kg. In general, when the battery 1100 operates in a low-temperature environment, such as -20 °C, the charging and discharging performance of the battery cell 20 with high energy density is better than that of the battery cell 20 with low energy density.

In a low-temperature environment, the heat of the battery cell 20 will dissipate from the case 10, and the heat of the first battery cell 201 adjacent to the first side beam 121 is more easily transferred to the outside of the battery 1100 through the first side beam 121. This results in a relatively lower temperature of the first battery cell 201, thus causing the first battery cell 201 to be more significantly affected by the low-temperature environment.

By adopting the technical solution of the embodiments, the first battery cell 201 is set as the type-II battery cell 203, and the type-II battery cell 203 has higher energy density, such that the type-II battery cell 203 exhibits better charging and discharging performance at a low temperature. This can reduce the impact of the low-temperature environment on the first battery cell 201, effectively improve the heat preservation performance and charging and discharging performance of the battery 1100 at a low temperature, ameliorate the temperature difference, and well balance the cost and capacity of the battery 1100.

In some other embodiments of the present application, as shown in FIG. 5, the type-I battery cell 202 is the battery cell 20 based on a sodium-ion electrochemical system, and the type-II battery cell 203 is the battery cell 20 using an active substance with an olivine structure as the main positive electrode material.

The type-I battery cell 202 is the battery cell 20 based on the sodium-ion electrochemical system. The sodium-ion electrochemical system includes, but is not limited to, a Prussian blue derivative/hard carbon system, a polyanionic fast-ionic conductor sodium vanadium phosphate (or vanadium sodium fluorophosphate or vanadium sodium oxyfluorophosphate)/hard carbon system, a transition metal oxide/hard carbon system, and the like.

The type-II battery cell 203 is the battery cell 20 using the active substance with an olivine structure as the main positive electrode material. The active substance with an olivine structure may be, but is not limited to, LiFePO₄ and LiMn_{0.6}Fe_{0.4}PO₄.

In general, the energy density of the battery cell 20 based on the sodium-ion electrochemical system is greater than the energy density of the battery cell 20 using the active substance with an olivine structure as the main positive electrode material.

In some other embodiments of the present application, as shown in FIG. 5, the type-I battery cell 202 is the battery cell 20 based on the sodium-ion electrochemical system, and the type-II battery cell 203 is the battery cell 20 using lithium nickel cobalt manganate with a layered structure as the main positive electrode material.

The type-II battery cell 203 is the battery cell 20 using lithium nickel cobalt manganate with a layered structure as the main positive electrode material. The lithium nickel cobalt manganate with a layered structure may be, but is not limited to, LiNi_{0.60}Co_{0.10}Mn_{0.30}O₂.

In general, the energy density of the battery cell 20 based on the sodium-ion electrochemical system is greater than the energy density of the battery cell 20 using lithium nickel cobalt manganate with a layered structure as the main positive electrode material.

In some other embodiments of the present application, as shown in FIG. 5, the type-I battery cell 202 is the battery cell 20 using the active substance with an olivine structure as the main positive electrode material, and the type-II battery cell 203 is the battery cell 20 using lithium nickel cobalt manganate with a layered structure as the main positive electrode material.

In general, the energy density of the battery cell 20 using the active substance with an olivine structure as the main positive electrode material is greater than the energy density of the battery cell 20 using lithium nickel cobalt manganate with a layered structure as the main positive electrode material.

By selecting the type-I battery cell 202 and the type-II battery cell 203 as described above, the energy density of the selected type-II battery cell 203 can be better made greater than the energy density of the type-I battery cell 202, so as to improve the overall heat preservation performance, charging and discharging performance, and energy density of the battery 1100 at a low temperature.

In some other embodiments of the present application, as shown in FIG. 5, the type-I battery cell 202 includes a sodium-ion battery cell, and the type-II battery cell 203 includes a lithium-ion battery cell; or the type-I battery cell 202 includes a lithium iron phosphate battery cell, and the type-II battery cell 203 includes a ternary battery cell.

The lithium-ion battery cell refers to a battery cell in which the positive electrode active material includes lithium. The lithium-containing positive electrode active material includes at least one of a lithium-containing positive electrode active material with a layered structure, a lithium-containing positive electrode active material with a spinel structure, or a lithium-containing positive electrode active material with an olivine structure.

The lithium-containing positive electrode active material with a layered structure includes at least one of lithium cobaltate, lithium nickelate, a lithium-rich material, a nickel-cobalt-manganese ternary material, and a manganese-cobalt-aluminum ternary material.

The lithium-containing positive electrode active material with a spinel structure includes lithium manganate.

The lithium-containing positive electrode active material with an olivine structure includes at least one of lithium iron phosphate and lithium manganese iron phosphate.

The lithium iron phosphate battery cell refers to a battery cell 20 in which the positive electrode active substance of the electrode plate in the battery cell 20 is lithium iron phosphate.

The ternary battery cell is also called a ternary lithium battery cell, which refers to a battery cell 20 in which the positive electrode active substance of the electrode plate in the battery cell 20 is a lithium-containing ternary positive electrode active material. The lithium-containing ternary positive electrode active material includes at least one of lithium cobaltate, lithium nickelate, a lithium-rich material, a nickel-cobalt-manganese ternary material, and a manganese-cobalt-aluminum ternary material.

The sodium-ion battery cell refers to a battery cell 20 that operates by relying on the movement of sodium ions between the positive electrode and the negative electrode.

In general, the energy density of the lithium-ion battery cell is greater than the energy density of the sodium-ion battery cell. The energy density of the ternary battery cell is greater than the energy density of the lithium iron phosphate battery cell.

By selecting the type-I battery cell 202 and the type-II battery cell 203 as described above, the energy density of the selected type-II battery cell 203 can be better made greater than the energy density of the type-I battery cell 202, so as to improve the overall heat preservation performance, charging and discharging performance, and energy density of the battery 1100 at a low temperature.

In some other embodiments of the present application, with reference to FIGs. 2, 4, and 5, the case 10 further includes a reinforcing beam 123. The reinforcing beam 123 is located in the accommodating space 101 and divides the accommodating space 101 into a first accommodating cavity 1011 and a second accommodating cavity 1012, and the insulating member 30 and the battery cell 20 are located in the first accommodating cavity 1011.

The reinforcing beam 123 may refer to a beam located in the accommodating space 101, and the reinforcing beam 123 can divide the accommodating space 101 into the first accommodating cavity 1011 and the second accommodating cavity 1012. The first accommodating cavity 1011 may be configured to accommodate the battery cell 20 and the insulating member 30.

With reference to FIG. 4, the reinforcing beam 123 extends in the width direction of the battery 1100, and both ends of the reinforcing beam 123 are connected to two first side beams 121 that are in the length direction of the battery 1100, respectively; a portion of the two first side beams 121, the reinforcing beam 123, and the second side beam 122 located on one side of the battery 1100 in the length direction define, in an enclosing manner, the first accommodating cavity 1011; another portion of the two first side beams 121, the reinforcing beam 123, and the second side beam 122 located on the other side of the battery 1100 in the length direction define, in an enclosing manner, the second accommodating cavity 1012; the first accommodating cavity 1011 and the second accommodating cavity 1012 are arranged side by side.

By adopting the technical solution of the embodiments, the arrangement of the reinforcing beam 123 can enhance the structural strength of the case 10, thereby helping to improve the service reliability of the battery 1100. The first accommodating cavity 1011 is configured to accommodate the battery cell 20, and the second accommodating cavity 1012 can accommodate other components of the battery 1100. The battery cell 20 can be separated from other components by the reinforcing beam 123, which can reduce the risk of damage and short circuit of the battery cell 20 due to interference between other components and the battery cell 20, thereby being more beneficial for improving the service reliability of the battery 1100. The case 10 adopts the structural forms of the first side beam 121, the reinforcing beam 123, and the second side beam 122. This structure is simple and reliable, and allows for the elimination of transverse and longitudinal beams inside the first accommodating cavity 1011, so as to provide more space for mounting the battery cell 20, thereby helping to improve the volumetric energy density of the battery 1100.

In some other embodiments of the present application, with reference to FIGs. 2, 4, and 5, the battery 1100 further includes a control device 40 configured to control the battery cell 20, and the control device 40 is located in the second accommodating cavity 1012.

The control device 40 may refer to a component configured to control the charging and discharging of the battery cell 20. The control device 40 may be a battery 1100 management system (BMS).

By adopting the technical solution of the embodiments, the control device 40 is the second accommodating cavity 1012, and the battery cell 20 and the control device 40 are separated by the reinforcing beam 123. This can reduce the mutual influence between the battery cell 20 and the control device 40, thereby helping to improve the service reliability of the battery 1100.

In some other embodiments of the present application, with reference to FIG. 2, the case 10 further includes a covering plate 124. The covering plate 124 is located on one side of the first side beam 121 and closes an opening on one side of the accommodating space 101.

The covering plate 124 may be a plate-shaped component that closes the opening on one side of the accommodating space 101. Specifically, the covering plate 124 may close only the opening on one side of the first accommodating cavity 1011, or may close the openings of both the first accommodating cavity 1011 and the second accommodating cavity 1012 located on the same side. The covering plate 124 may be connected to the side beam of the case 10 by means of a screw joint connection, a snap-fit connection, an adhesive connection, or the like.

As an example, in the case that the lower case body 12 is of a hollow structure with one end open and the case cover 11 is of a plate-shaped structure, the covering plate 124 may be the case cover 11, or the covering plate 124 may be a bottom plate of the case cover 11 disposed opposite to the lower case body 12; in the case that both the lower case body 12 and the case cover 11 are of hollow structures with one side open, the covering plate 124 may be a bottom plate of the lower case body 12 disposed opposite to the case cover 11.

By adopting the technical solution of the embodiments, the covering plate 124 closes the opening on one side of the accommodating space 101, which can reduce the influence of external components on the battery cell 20 and the insulating member 30, thereby helping to improve the service reliability of the battery 1100.

In some other embodiments of the present application, with reference to FIG. 2, the covering plate 124 is a heat exchange plate 125 configured to exchange heat with the battery cell 20.

It can be understood that the covering plate 124 may refer to a heat exchange plate 125, the heat exchange plate 125 may exchange heat with the battery cell 20, a heat exchange channel is disposed inside the heat exchange plate 125, and a heat exchange medium flows in the heat exchange channel of the heat exchange plate 125 to achieve heat exchange of the battery cell 20. The heat exchange plate 125 may be of a multi-layer plate-shaped structure, and the heat exchange channel is formed, in an enclosing manner, between two layers of plates. The heat exchange plate 125 may also be of a tube sheet structure.

When the temperature of the heat exchange medium in the heat exchange channel of the heat exchange plate 125 is higher than the temperature of the battery cell 20, the heat exchange plate 125 heats the battery cell 20; when the temperature of the heat exchange medium in the heat exchange channel of the heat exchange plate 125 is lower than the temperature of the battery cell 20, the heat exchange plate 125 cools the battery cell 20, such that the heat exchange of the battery cell 20 is achieved. In specific applications, the covering plate 124 may be located at the bottom of the battery cell 20 to achieve heat exchange at the bottom of the battery cell 20, or the covering plate 124 may be located at the top of the battery cell 20 to achieve heat exchange at the top of the battery 1100.

By adopting the technical solution of the embodiments, the covering plate 124 is the heat exchange plate 125, and the heat exchange plate 125 exchanges heat with the battery cell 20, which is beneficial for controlling the temperature of the battery cell 20 within a suitable temperature range, so as to improve the service reliability and charging and discharging performance of the battery cell 20, and improve the service reliability and charging and discharging performance of the battery 1100.

In some other embodiments of the present application, with reference to FIG. 2, the case 10 further includes a case cover 11. The case cover 11 is located on the other side of the first side beam 121 and closes an opening on the other side of the accommodating space 101.

The covering plate 124 and the case cover 11 are respectively located on the two opposite sides of the first side beam 121, and respectively close the openings on the two opposite sides of the accommodating space 101. The case cover 11 may close only the opening on a side of the first accommodating cavity 1011 facing away from the covering plate 124, or may close both the opening on a side of the first accommodating cavity 1011 facing away from the covering plate 124 and the opening on a side of the second accommodating cavity 1012 facing away from the covering plate 124. The case cover 11 may be of a plate-shaped component or of a hollow structure with one side open. The case cover 11 may also exchange heat with the battery cell 20. In this way, the top and bottom of the battery cell 20 can exchange heat simultaneously through the case cover 11 and the covering plate 124, thereby improving the heat exchange effect of the battery cell 20 and improving the charging and discharging performance of the battery cell 20.

By adopting the technical solution of the embodiments, the case cover 11 and the covering plate 124 can close the openings on the two opposite sides of the accommodating space 101, which can improve the sealing performance of the case 10 and help to improve the service reliability and service life of the battery 1100.

The present application will be described below in conjunction with some specific examples.

### Example 1

In this example, as shown in FIGs. 1 to 8, the battery 1100 includes a case 10, an insulating member 30, and at least one battery cell 20. The case 10 includes a first side beam 121 and a second side beam 122, and the first side beam 121 and the second side beam 122 are connected and define, in an enclosing manner, an accommodating space 101; the at least one battery cell 20 is located in the accommodating space 101, the battery cell 20 adjacent to the first side beam 121 is a first battery cell 201, a surface of the first battery cell 201 with the largest area is a first surface 21, and the first surface 21 of the first battery cell 201 is disposed facing the first side beam 121; the insulating member 30 is located in the accommodating space 101, and the insulating member 30 is disposed between the first battery cell 201 and the first side beam 121.

In this example, the length of the first side beam 121 is greater than the length of the second side beam 122.

In this example, one side of the insulating member 30 abuts against the first battery cell 201, and/or the other side of the insulating member 30 abuts against the first side beam 121.

In this example, the insulating member 30 is fixedly connected to the first battery cell 201 and the first side beam 121.

In this example, one side of the insulating member 30 is bonded to the first battery cell 201; and/or the other side of the insulating member 30 is bonded to the first side beam 121.

In this example, the insulating member 30 is an elastic insulating member or a rigid insulating member; and/or the insulating member 30 is a heat insulating member.

In this example, a plurality of first battery cells 201 are provided, the plurality of first battery cells 201 are disposed in a second direction, and the second direction is parallel to the first surface 21: at least two first battery cells 201 are connected to the insulating member 30.

In this example, a projection of the insulating member 30 in the first direction at least partially overlaps with projections of the first surfaces 21 of the at least two first battery cells 201 in the first direction, and the first direction is perpendicular to the first surfaces 21.

In this example, the first side beam 121 is provided with a mounting structure 1211 configured to achieve mounting of the battery 1100.

In this example, two first side beams 121 are provided, the two first side beams 121 are disposed opposite to each other, and the battery cell 20 is located between the two first side beams 121. The insulating member 30 is disposed between one of the first side beams 121 and the corresponding first battery cell 201, and the insulating member 30 is disposed between the other first side beam 121 and the corresponding first battery cell 201.

In this example, a plurality of first battery cells 201 are provided, the plurality of battery cells 20 include a type-I battery cell 202 and a type-II battery cell 203, at least the first battery cells 201 are the type-II battery cells 203, and the energy density of the type-II battery cell 203 is greater than the energy density of the type-I battery cell 202.

In this example, the type-I battery cell 202 includes a sodium-ion battery cell, and the type-II battery cell 203 includes a lithium-ion battery cell; or the type-I battery cell 202 includes a lithium iron phosphate battery cell, and the type-II battery cell 203 includes a ternary battery cell.

In this example, the case 10 further includes a reinforcing beam 123. The reinforcing beam 123 is located in the accommodating space 101 and divides the accommodating space 101 into a first accommodating cavity 1011 and a second accommodating cavity 1012, and the insulating member 30 and the battery cell 20 are located in the first accommodating cavity 1011.

In this example, the battery 1100 further includes a control device 40 configured to control the battery cell 20, and the control device 40 is located in the second accommodating cavity 1012.

In this example, the case 10 further includes a covering plate 124. The covering plate 124 is located on one side of the first side beam 121 and closes an opening on one side of the accommodating space 101.

In this example, the covering plate 124 is a heat exchange plate 125 configured to exchange heat with the battery cell 20.

In this example, the case 10 further includes a case cover 11. The case cover 11 is located on the other side of the first side beam 121 and closes an opening on the other side of the accommodating space 101.

In this example, the battery 1100 has a height direction, a length direction, and a width direction. The height direction of the battery 1100 may refer to a Z direction, the width direction of the battery 1100 may refer to an X direction, and the length direction of the battery 1100 may refer to a Y direction. The length of the battery 1100 may be greater than the width. The case 10 defines an outline structure of the battery 1100. The height direction of the case 10 is the height direction of the battery 1100, the length direction of the case 10 is the length direction of the battery 1100, and the width direction of the case 10 is the width direction of the battery 1100.

In this example, the battery cell 20 also has a height direction, a length direction, and a width direction. The height direction of the battery cell 20 may refer to a Z₁ direction, the width direction of the battery cell 20 may refer to an X₁ direction, and the length direction of the battery cell 20 may refer to a Yi direction. The battery cell 20 includes two first end surfaces 22 distributed in the height direction thereof, and the height of the battery cell 20 is defined between the two first end surfaces 22. The battery cell 20 includes two first side surfaces 23 distributed in the thickness direction thereof and two second side surfaces 24 distributed in the length direction thereof, the width of the battery cell 20 is defined between the two first side surfaces 23, and the length of the battery cell 20 is defined between the two second side surfaces 24. The area of the two first end surfaces 22 is defined by the length and width of the battery cell 20, the area of the first side surface 23 is defined by the height and length of the battery cell 20, and the area of the second side surface 24 is defined by the height and width of the battery cell 20. For a flat battery cell 20, such as a prismatic battery cell, its width is smaller than its length and height, and its first side surface 23 has the largest area, so the first side surface 23 is also called a large surface.

In this example, two first side beams 121 are provided, and two second side beams 122 are provided. The two first side beams 121 and the two second side beams 122 are connected end to end to define, in an enclosing manner, a rectangular frame structure, and the internal space of the rectangular frame structure forms the accommodating space 101. The two first side beams 121 are located on the two opposite sides of the case 10 in the width direction of the battery 1100 and extend in the length direction of the battery 1100, and the two second side beams 122 are located on the two opposite sides of the case 10 in the length direction of the battery 1100 and extend in the width direction of the battery 1100.

In this example, the reinforcing beam 123 is located in the accommodating space 101, and both ends of the reinforcing beam 123 are connected to the two first side beams 121, respectively. The reinforcing beam 123 extends in the width direction of the battery 1100, and the reinforcing beam 123 divides the accommodating space 101 into a first accommodating cavity 1011 and a second accommodating cavity 1012 that are distributed side by side in the length direction of the battery 1100.

In this example, the battery 1100 includes a plurality of battery cells 20. The plurality of battery cells 20 can form a plurality of columns of battery cells 20, the plurality of columns of battery cells 20 are disposed in the width direction of the battery 1100, and the plurality of battery cells 20 in each column of battery cells 20 are disposed in the length direction of the battery 1100; the plurality of battery cells 20 in two opposite columns of battery cells 20 in the width direction of the battery 1100 are all first battery cells 201.

In this example, the height direction of each battery cell 20 is parallel to the height direction of the battery 1100, the width direction of each battery cell 20 is parallel to the width direction of the battery 1100, and the length direction of each battery cell 20 is parallel to the length direction of the battery 1100, such that the first side surface 23 (the first surface 21) of each battery cell 20 is disposed opposite to the first side beam 121, and the first side surface 23 of the first battery cell 201 is disposed facing the first side beam 121.

In this example, insulating members 30 are respectively disposed between each of the two columns of first battery cells 201 and their respective first side beam 121, the insulating members 30 can cover the first surfaces 21 of all the corresponding first battery cells 201, and the insulating members 30 are bonded to the first surfaces 21 of the first battery cells 201.

In this example, the insulating member 30 is of a single-layer structure.

### Example 2

This example differs from Example 1 in that, as shown in FIGs. 9 and 10, the insulating member 30 includes a plurality of layer bodies 31, the plurality of layer bodies 31 are stacked in the first direction, and the first direction is a distribution direction of the battery cell 20 and the first side beam 121; the plurality of layer bodies 31 include at least one of an elastic insulating layer and a rigid insulating layer; and/or, the plurality of layer bodies 31 include a heat insulating layer.

In this example, the first direction may refer to the width direction of the battery 1100, two layer bodies 31 are provided, and the two layer bodies 31 cover the first surface 21 of the first battery cell 201 in the width direction of the battery 1100.

### Example 3

This example differs from Example 1 in that, as shown in FIGs. 11 and 12, a protrusion 32 is provided on a surface of the insulating member 30 facing the first side beam 121.

In this example, a plurality of protrusions 32 are provided, and the plurality of protrusions 32 are spaced apart from each other in the height direction of the first battery cell 201. The protrusions 32 extend in the length direction of the battery 1100, and the plurality of protrusions 32 are evenly spaced apart from each other in the height direction of the battery cell 20.

### Example 4

This example differs from Example 1 in that the plurality of battery cells 20 in a column of battery cells 20 adjacent to the first side beam 121 are the type-II battery cells 203, and the other battery cells 20 are the type-I battery cells 202.

### Example 5

This example differs from Example 4 in that the plurality of battery cells 20 in the two columns of battery cells 20 adjacent to the first side beam 121 are the type-II battery cells 203, and the other battery cells 20 are the type-I battery cells 202.

In some other embodiments of the present application, as shown in FIG. 1, an electric device is provided. The electric device includes the battery 1100 according to the above embodiments.

The electric device according to the embodiments of the present application employs the above battery 1100, and the battery cell 20 exhibits good service reliability, which improves the service reliability and service life of the battery 1100.

In some other embodiments of the present application, as shown in FIGs. 1, 2, and 3, the electric device is a vehicle 1000, and the first side beam 121 is located on a side of the first battery cell 201 facing a door of the vehicle 1000.

The vehicle 1000 has a width direction and a length direction. The length direction of the vehicle 1000 may refer to the distribution direction of front and rear wheels of the vehicle 1000, and the length direction of the vehicle 1000 may refer to the direction indicated by an arrow X₂. The width direction of the vehicle 1000 may refer to the distribution direction of left and right wheels of the vehicle 1000, and the width direction of the vehicle 1000 may refer to the direction indicated by an arrow Y₂.

The door of the vehicle 1000 may refer to the door of the vehicle 1000 used for passenger and driver access or the like. The door of the vehicle 1000 is usually located on a side portion of the vehicle 1000 in the width direction.

The first side beam 121 is located on a side of the first battery cell 201 facing the door of the vehicle 1000. It can be understood that the first side beam 121 is located between the first battery cell 201 and the door of the vehicle 1000, the first surface 21 of the first battery cell 201 is disposed facing the door of the vehicle 1000, and the insulating member 30 is located between the door of the vehicle 1000 and the first battery cell 201.

By adopting the technical solution of the embodiments, in the case that the vehicle 1000 experiences a side-pillar collision or a side compression, the first side beam 121 of the battery 1100 is subjected to the primary impact. During the impact process, the impact is borne by both the first surface 21 of the first battery cell 201 and the insulating member 30. Since the first surface 21 allows a significantly greater intrusion than other surfaces of the first battery cell 201, the risk of short circuit due to the compression and deformation of the first battery cell 201 is relatively low, which can greatly improve the safety of the battery 1100 under the side-pillar collision and side compression conditions. In addition, during the impact, since the insulating member 30 is located between the first battery cell 201 and the insulating member 30, the insulating member 30 can also bear a certain impact force. Thus, the insulating member 30 can protect the first battery cell 201, thereby reducing the impact force acting on the battery cell 20, reducing the risk of short circuit of the first battery cell 201, and further improving the safety of the battery 1100 under the side-pillar collision and side compression conditions.

The differences between the embodiments above are highlighted in the description of these embodiments, and reference may be made to each other for the identical or similar parts. For brevity, details are not described herein again.

Finally, it should be noted that the above embodiments are only used to illustrate the technical solutions of the present application, rather than limit the same. Although the present application has been described in detail with reference to the foregoing embodiments, those of ordinary skill in the art should understand that modifications can still be made to the technical solutions recorded in the foregoing embodiments, or equivalent substitutions to some or all of the technical features can be made. However, such modifications or substitutions do not make the spirit of the corresponding technical solutions deviate from the scope of the technical solutions in the embodiments of the present application, and shall all fall within the scope of the claims and specification of the present application. In particular, the technical features mentioned in the embodiments can be combined in any manner, provided that there is no structural conflict. The present application is not limited to the specific embodiments disclosed herein, but encompasses all technical solutions falling within the scope of the claims.

## Claims

1. A battery, comprising:
a case comprising a first side beam and a second side beam, the first side beam and the second side beam being connected and defining, in an enclosing manner, an accommodating space;
at least one battery cell located in the accommodating space, the battery cell adjacent to the first side beam being a first battery cell, a surface of the first battery cell with a largest area being a first surface, and the first surface of the first battery cell being disposed facing the first side beam; and
an insulating member located in the accommodating space, the insulating member being disposed between the first battery cell and the first side beam.

2. The battery according to claim 1, wherein a length of the first side beam is greater than a length of the second side beam.

3. The battery according to claim 1 or 2, wherein one side of the insulating member abuts against the first battery cell, and/or the other side of the insulating member abuts against the first side beam.

4. The battery according to any one of claims 1 to 3, wherein the insulating member is fixedly connected to the first battery cell and the first side beam.

5. The battery according to claim 4, wherein one side of the insulating member is bonded to the first battery cell; and/or the other side of the insulating member is bonded to the first side beam.

6. The battery according to any one of claims 1 to 5, wherein the insulating member is an elastic insulating member or a rigid insulating member; and/or the insulating member is a heat insulating member.

7. The battery according to any one of claims 1 to 6, wherein the insulating member comprises a plurality of layer bodies, the plurality of layer bodies are stacked in a first direction, and the first direction is a distribution direction of the battery cell and the first side beam,
wherein the plurality of layer bodies comprise at least one of an elastic insulating layer and a rigid insulating layer; and/or the plurality of layer bodies comprise a heat insulating layer.

8. The battery according to any one of claims 1 to 7, wherein a protrusion is provided on a surface of the insulating member facing the first side beam.

9. The battery according to claim 8, wherein a plurality of protrusions are provided, and the plurality of protrusions are spaced apart from each other in a height direction of the first battery cell.

10. The battery according to any one of claims 1 to 9, wherein a plurality of first battery cells are provided, the plurality of first battery cells are disposed in a second direction, and the second direction is parallel to the first surface: at least two first battery cells are connected to the insulating member.

11. The battery according to claim 10, wherein a projection of the insulating member in the first direction at least partially overlaps with projections of the first surfaces of the at least two first battery cells in the first direction, and the first direction is perpendicular to the first surfaces.

12. The battery according to any one of claims 1 to 11, wherein the first side beam is provided with a mounting structure configured to achieve mounting of the battery.

13. The battery according to any one of claims 1 to 12, wherein two first side beams are provided, the two first side beams are disposed opposite to each other, the battery cell is located between the two first side beams, the insulating member is disposed between one of the first side beams and the corresponding first battery cell, and the insulating member is disposed between the other first side beam and the corresponding first battery cell.

14. The battery according to any one of claims 1 to 13, wherein a plurality of first battery cells are provided, the plurality of battery cells comprise a type-I battery cell and a type-II battery cell, at least the first battery cells are the type-II battery cells, and energy density of the type-II battery cell is greater than energy density of the type-I battery cell.

15. The battery according to claim 14, wherein the type-I battery cell comprises a sodium-ion battery cell, and the type-II battery cell comprises a lithium-ion battery cell;
or the type-I battery cell comprises a lithium iron phosphate battery cell, and the type-II battery cell comprises a ternary battery cell.

16. The battery according to any one of claims 1 to 15, wherein the case further comprises a reinforcing beam, the reinforcing beam is located in the accommodating space and divides the accommodating space into a first accommodating cavity and a second accommodating cavity, and the insulating member and the battery cell are located in the first accommodating cavity.

17. The battery according to claim 16, wherein the battery further comprises a control device configured to control the battery cell, and the control device is located in the second accommodating cavity.

18. The battery according to any one of claims 1 to 17, wherein the case further comprises a covering plate, and the covering plate is located on one side of the first side beam and closes an opening on one side of the accommodating space.

19. The battery according to claim 18, wherein the covering plate is a heat exchange plate configured to exchange heat with the battery cell.

20. The battery according to any one of claims 18 or 19, wherein the case further comprises a case cover, and the case cover is located on the other side of the first side beam and closes an opening on the other side of the accommodating space.

21. An electric device, comprising the battery according to any one of claims 1 to 20.

22. The electric device according to claim 21, wherein the electric device is a vehicle, and the first side beam is located on a side of the first battery cell facing a door of the vehicle.
